(19) Europäisches Patentamt
European Patent Office
Office européen des brevets

(11) EP 0 613 908 B1

(12) # FASCICULE DE BREVET EUROPEEN

(45) Date de publication et mention de la délivrance du brevet:
**29.07.1998 Bulletin 1998/31**

(51) Int Cl.6: **C08F 4/606**, C08F 10/00

(21) Numéro de dépôt: **94200399.7**

(22) Date de dépôt: **17.02.1994**

(54) **Précurseur solide d'un système catalytique pour la polymérisation d'oléfines, procédé pour sa préparation et système catalytique comprenant ce précurseur solide**

Feste Vorstufe eines Katalysatorsystems zur Olefinpolymerisation, Verfahren zu ihrer Herstellung und diese Vorstufe enthaltendes Katalysatorsystem

Solid precursor of a catalytic system for polymerization of olefins, process for its preparation and catalytic system containing said precursor

(84) Etats contractants désignés:
**AT BE DE ES FR GB IT NL PT SE**

(30) Priorité: **01.03.1993 BE 9300191**

(43) Date de publication de la demande:
**07.09.1994 Bulletin 1994/36**

(60) Demande divisionnaire: **97120938.2 / 0 838 476**

(73) Titulaire: **SOLVAY POLYOLEFINS EUROPE - BELGIUM (Société Anonyme)**
**1050 Bruxelles (BE)**

(72) Inventeur: **Zandona, Nicola**
**B-1410 Waterloo (BE)**

(74) Mandataire: **Destryker, Elise Martine et al**
**Solvay Polyolefins Europe-Belgium (Société Anonyme)**
**Département de la Propriété Industrielle**
**310, rue de Ransbeek**
**1120 Bruxelles (BE)**

(56) Documents cités:

| | |
|---|---|
| **EP-A- 0 002 521** | **EP-A- 0 426 638** |
| **EP-A- 0 500 944** | **EP-A- 0 522 581** |
| **EP-A- 0 573 120** | **EP-A- 0 574 258** |

- **CHEMICAL ABSTRACTS, vol. 117, no. 22, 30 Novembre 1992, Columbus, Ohio, US; abstract no. 213195p, SUGIMOTO ET AL. 'Supported olefin polymerization catalysts' page 16 ; & JP-A-4 142 306 (MITSUI TOATSU CHEMICALS, INC.)**

EP 0 613 908 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention concerne un précurseur solide d'un système catalytique utilisable pour la polymérisation d'oléfines, en particulier un précurseur solide comprenant un métallocène. Elle concerne également un procédé pour la préparation de ce précurseur solide, un système catalytique comprenant ce précurseur et un procédé de polymérisation d'oléfines en présence de ce système catalytique.

Des catalyseurs à base de métallocène sont connus. Par exemple, la demande de brevet européen EP-0522581 divulgue des catalyseurs comprenant (A) un composé de métal de transition de type métallocène et (B) un composé capable d'ioniser ce métallocène, au moins un des deux composés (A) et (B) étant déposé sur un support (C). La quantité de métal de transition dans ces catalyseurs est de 0,05 à 10 g par 100 g de support. D'autres catalyseurs à base de métallocène sont divulgués dans la demande de brevet européen EP-0573120 (publiée le 08.12.93). Ce document décrit un procédé de fabrication d'un catalyseur selon lequel on mélange, dans une première étape, un métallocène neutre avec un composé organométallique, et on y ajoute, dans une deuxième étape, un agent ionsant. Par ailleurs, la demande de brevet européen EP-0574258 (publiée le 15.12.93) divulgue des catalyseurs contenant le produit de réaction entre un métallocène neutre avec un acide de Lewis et un composé organoaluminique.

La demande de brevet EP-426639 (FINA TECHNOLOGY INC.) divulgue un procédé pour la polymérisation d'oléfines en présence d'un catalyseur du type métallocène à l'état ionisé, obtenu en mélangeant une solution d'un agent ionisant, telle qu'une solution de tétrakis(pentafluorophényl)borate de triphénylcarbénium dans du toluène, avec une solution d'un métallocène neutre alkylé et dérivé d'un métal de transition (par exemple une solution de bis(cyclopentadiényl)diméthylzirconium dans du toluène). Ces métallocènes neutres alkylés présentent l'inconvénient d'être instables, difficiles à préparer et à stocker. Par ailleurs, ces catalyseurs connus sont particulièrement instables et présentent, lors de leur utilisation pour la polymérisation d'oléfines, une activité qui décroît rapidement dès le moment de leur préparation.

La préparation de ces catalyseurs peut être simplifiée, comme décrit dans la demande de brevet EP-0500944-A1 (MITSUI TOATSU CHEMICALS INC.), en sélectionnant parmi les métallocènes neutres ceux qui sont halogénés, en faisant réagir d'abord un composé organoaluminique avec le métallocène neutre halogéné dans un solvant aromatique, et en ionisant ensuite le produit ainsi obtenu au moyen d'un agent ionisant. A cet effet, on introduit successivement dans le réacteur de polymérisation : (a) le produit de la réaction d'alkylation entre le composé organoaluminique et le métallocène neutre halogéné dans un solvant aromatique, (b) l'oléfine que l'on souhaite polymériser et (c) l'agent ionisant. Dans ce procédé, la réaction préalable d'alkylation du métallocène neutre halogéné avec le composé organoaluminique dans un solvant aromatique est d'une importance essentielle pour obtenir un catalyseur stable et actif. Ce procédé connu présente l'inconvénient de nécessiter un traitement préalable du métallocène neutre halogéné au moyen d'un composé organoaluminique avant de le mettre en contact avec l'agent ionisant. En outre, le produit de la réaction d'alkylation du métallocène neutre halogéné étant très instable, la mise en contact de celui-ci avec l'agent ionisant doit obligatoirement être réalisée in situ dans le réacteur de polymérisation.

La présente invention vise à remédier aux inconvénients précités en fournissant un précurseur solide nouveau d'un système catalytique, dont la préparation est plus aisée et ne nécessite pas un traitement préalable du métallocène neutre halogéné. Un autre objectif de l'invention est de fournir un précurseur solide stable que l'on peut préparer au préalable et conserver pendant au moins un jour (généralement davantage) avant de l'utiliser pour la polymérisation d'oléfines sans risque de désactivation. Un objectif supplémentaire de l'invention est de fournir un précurseur solide d'un système catalytique qui permet l'obtention de polymères oléfiniques de masse moléculaire moyenne élevée, de distribution des masses moléculaires large et de poids spécifique apparent élevé.

L'invention concerne dès lors un précurseur solide d'un système catalytique pour la polymérisation d'oléfines, ce précurseur contenant au moins un métallocène neutre dérivé d'un métal de transition et au moins un agent ionisant caractérisé en ce que le métallocène neutre est à l'état essentiellement halogéné, le métal de transition étant lié à au moins un atome d'halogène.

Une caractéristique essentielle du précurseur solide selon l'invention est l'état halogéné du métallocène neutre faisant partie du précurseur. Dans le précurseur solide selon l'invention, le métallocène neutre est habituellement choisi parmi les composés de formule $(C_p)_a(C_p')_bMX_xZ_z$, dans laquelle

- $C_p$ et $C_p'$ désignent chacun un radical hydrocarboné insaturé coordiné à l'atome central M, les groupes $C_p$ et $C_p'$ pouvant être liés par un pont covalent,
- M désigne le métal de transition, qui est choisi parmi les groupes IIIB, IVB, VB et VIB du tableau périodique,
- a, b, x et z désignent des nombres entiers tels que $(a + b + x + z) = m$ , $x > 0$, $z \geq 0$ et a et/ou $b \neq 0$,
- m désigne la valence du métal de transition M,
- X désigne un halogène, et
- Z désigne un radical hydrocarboné pouvant éventuellement comprendre de l'oxygène ou un radical silyl de formule $(-R_t\text{-Si-}R'R''R''')$ où

- R désigne un groupe alkyle, alkényle, aryle, alkoxy ou cycloalkyle éventuellement substitué comprenant jusqu'à 20 atomes de carbone,
- R', R'' et R''' sont identiques ou différents et désignent chacun un halogène ou un groupe alkyle, alkényle, aryle, alkoxy ou cycloalkyle éventuellement substitué comprenant jusqu'à 20 atomes de carbone,
- t désigne 0 ou 1.

De préférence, le métal de transition est sélectionné parmi le scandium, le titane, le zirconium, l'hafnium et le vanadium. Le zirconium convient particulièrement bien. Les groupes $C_p$ et $C_p$' représentent chacun avantageusement un groupe mono- ou polycyclique éventuellement substitué comprenant de 5 à 50 atomes de carbone liés par des doubles liaisons conjuguées. Comme exemple typique on peut citer le radical cyclopentadiényle, indényle ou fluorényle ou un dérivé substitué de ce radical, dans lequel au moins un atome d'hydrogène est substitué par un radical hydrocarboné comprenant jusqu'à 10 atomes de carbone. Il peut également s'agir d'un radical dérivé d'un élément choisi parmi le groupe VA du tableau périodique, par exemple l'azote ou le phosphore.

On peut citer comme exemples de métallocènes neutres de formule $(C_p)_a(C_p')_bMX_xZ_z$, dans le cas où z est égal à 0, les métallocènes de scandium mono- et dihalogénés tels que le chlorodi(cyclopentadiényl)scandium et le dichloro (indényl)scandium, les métallocènes de titane mono-, di- et trihalogénés tels que le chlorotri(pentaméthylcyclopentadiényl)titane, le dibromodi(méthylcyclopentadiényl)titane et le trichloro(cyclopentadiényl)titane, les métallocènes de zirconium mono-, di- et trihalogénés tels que le iodotri(cyclopentadiényl)zirconium, le dibromo(cyclopentadiényl-1-indényl)zirconium, le trichloro(fluorényl)zirconium, les métallocènes d'hafnium mono-, di- et trihalogénés, les métallocènes de vanadium mono-, di- et trihalogénés tels que le chlorotri(cyclopentadiényl)vanadium, le dichlorodi(éthylcyclopentadiényl)vanadium et le trichloro(éthylindényl)vanadium, les métallocènes de chrome trivalents mono- et dihalogénés tels que le dichloro(cyclopentadiényl)chrome.

Dans le cas où z est différent de 0 et où Z est un radical hydrocarboné, le métallocène neutre de formule $(C_p)_a(C_p')_bMX_xZ_z$ peut par exemple être choisi parmi le chloro(cyclopentadiényl)éthylscandium, le dibromo(méthylcyclopentadiényl)butyltitane, le chloro(indényl)isopropyltitane et le dichloro(fluorényl)hexylzirconium.

Dans le cas où z est différent de 0 et où Z est un radical silyl de formule $(-R_t\text{-Si-}R'R''R''')$, le métallocène neutre de formule $(C_p)_a(C_p')_bMX_xZ_z$ peut par exemple être choisi parmi ceux comprenant comme radical silyl, l'allyldiméthylchlorosilyl, l'allylméthyldiéthoxysilyl, le 5-(dicycloheptényl)trichlorosilyl, le 2-bromo-3-triméthylsilyl-1-propényl, le 3-chloropropyldiméthylvinylsilyl, le 2-(3-cyclohexényl)éthyltriméthoxysilyl et le diphénylvinylchlorosilyl.

Les métallocènes ayant un pont covalent reliant les deux groupes $C_p$ et $C_p$' peuvent être choisis parmi ceux de formule générale

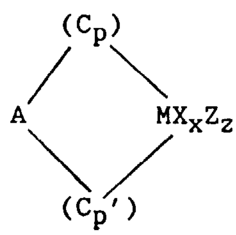

dans laquelle A représente un groupe alkylène pouvant éventuellement comprendre de l'oxygène, alkénylène, arylalkylène, alkylarylène, arylalkénylène, éventuellement halogéné ou un radical dérivé d'un élément choisi parmi les groupes IIIA, IVA, VA et VIA du tableau périodique, tel que le bore, l'aluminium, le silicium, le germanium, l'étain, l'azote, le phosphore et le soufre. On peut citer comme exemple de métallocènes pontés, ceux répondant aux formules

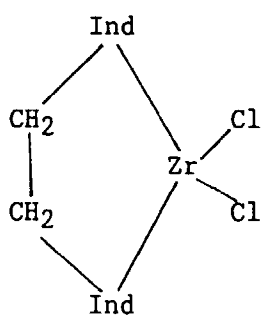 , 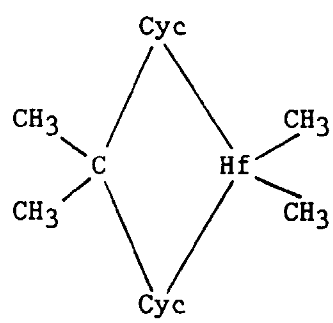 ,

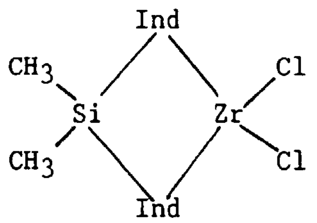

,

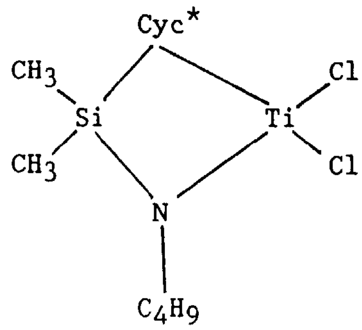

,

dans lesquelles Ind représente le radical indényle, Cyc représente le radical cyclopentadiényle et Cyc* représente le radical pentaméthylcyclopentadiényle.

Les métallocènes de formule $(C_p)_a(C_p')_bMX_xZ_z$ préférés sont ceux dans lesquels les groupes $C_p$ et $C_p'$ sont choisis parmi les radicaux cyclopentadiényle, indényle et fluorényle. De bons résultats sont obtenus avec ceux dont les groupes $C_p$ et $C_p'$ sont liés par un pont covalent du type alkyle. Les métallocènes dont le métal de transition est choisi parmi le titane, le zirconium et l'hafnium conviennent très bien. On obtient des résultats particulièrement satisfaisants avec les métallocènes dérivés du zirconium.

Selon l'invention, on entend désigner par agent ionisant, un composé comprenant une première partie qui présente les propriétés d'un acide de Lewis et qui est capable d'ioniser le métallocène neutre, et une deuxième partie, qui est inerte vis-à-vis du métallocène ionisé, et qui est capable de stabiliser le métallocène ionisé. L'agent ionisant peut être un composé ionique comprenant un cation présentant les propriétés d'un acide de Lewis, et un anion constituant la deuxième partie précitée de l'agent ionisant. Les anions ayant conduit à de très bons résultats sont les organoborates. On entend désigner par organoborate un dérivé du bore, dans lequel l'atome de bore est lié à 4 substituants organiques. On peut citer comme exemples d'agents ionisants ioniques, le tétrakis(pentafluorophényl)borate de triphénylcarbénium, le tétrakis(pentafluorophényl)borate de N,N-diméthylanilinium et le tétrakis(pentafluorophényl)borate de tri(n-butyl)ammonium. Les acides de Lewis cationiques préférés sont le carbénium, le sulfonium et l'oxonium.

Les agents ionisants tout particulièrement préférés sont ceux comprenant un cation de type carbénium.

En variante, l'agent ionisant peut également être un composé nonionique présentant les propriétés d'un acide de Lewis qui est capable de transformer le métallocène neutre en métallocène cationique. A cet effet, l'agent ionisant est lui-même transformé en un anion inerte vis-à-vis du métallocène cationique qui est capable de stabiliser celui-ci. On peut citer comme exemples d'agent ionisant nonionique, le tri(pentafluorophényl)bore, le triphénylbore, le triméthylbore, le tri(triméthylsilyl)borate et les organoboroxines.

L'agent ionisant est de préférence sélectionné parmi le tétrakis(pentafluorophényl)borate de triphénylcarbénium et le tri(pentafluorophényl)bore.

Le tétrakis(pentafluorophényl)borate de triphénilcarbénium convient particulièrement bien.

Le précurseur solide selon l'invention comprend habituellement :

- de 0,1 à 30 % en poids du métal de transition, typiquement de 0,2 à 20 % en poids, les valeurs de 0,5 à 10 % en poids étant les plus courantes;
- de 1 à 50 % en poids d'halogène, avantageusement de 5 à 30 % en poids.

Le précurseur solide selon l'invention contient l'agent ionisant en une quantité suffisante pour pouvoir ioniser la plus grande partie (par exemple au moins 80 % en poids), de préférence la totalité du métallocène neutre. Les quantités optimales respectives en métallocène neutre halogéné et en agent ionisant dans le précurseur vont dès lors dépendre du métallocène et de l'agent ionisant sélectionné. En pratique, le précurseur solide selon l'invention comprend avantageusement des quantités de métallocène neutre et d'agent ionisant dans un rapport molaire de 0,5 à 2; elles sont de préférence sensiblement équimolaires. De préférence, le rapport pondéral du métallocène neutre à l'agent ionisant est de 0,1 à 10, en particulier de 0,2 à 2.

Le précurseur solide selon l'invention se présente en général sous la forme d'une poudre de granulométrie caractérisée par :

- un diamètre moyen D de 1 à 500 µm, typiquement de 2 à 350 µm, les valeurs de 5 à 200 étant les plus courantes, par exemple environ 10 µm;
- un écart type σ de 5 à 50 µm.

Le diamètre moyen D et l'écart type a sont définis par les relations suivantes :

$$D=\frac{\Sigma\, n_i D_i}{\Sigma\, n_i} \qquad \text{et} \qquad \sigma=\sqrt{\frac{\Sigma\, n_i (D_i - D)^2}{\Sigma\, n_i}}$$

où $n_i$ désigne la fréquence pondérale des particules de diamètre $D_i$. Le diamètre moyen D et l'écart type a sont mesurés par granulométrie laser au moyen d'un appareil MALVERN® MSIZER 20. En général, le précurseur solide selon l'invention se caractérise en outre par une surface spécifique de 50 à 300 $m^2$/g, typiquement de 80 à 200 $m^2$/g, par exemple environ 150, et par un volume poreux de 0,1 à 3 $cm^3$/g, par exemple environ 1.

Selon une variante avantageuse du précurseur solide suivant l'invention, celui-ci comprend en outre un support, qui peut être un polymère (tel que par exemple le polyéthylène, le polypropylène et leurs copolymères) ou un support minéral. On peut citer comme exemples de support minéral, les halogénures métalliques, tels que le chlorure de magnésium, les oxydes métalliques tels que les oxydes de silicium ou d'aluminium (éventuellement traités avec un composé fluoré), de titane, de zirconium, de thorium, leurs mélanges et les oxydes mixtes de ces métaux tels que le silicate d'aluminium et le phosphate d'aluminium. La silice, l'alumine, le chlorure de magnésium, le phosphate d'aluminium et les mélanges de silice et de chlorure de magnésium conviennent bien.

Dans cette variante avantageuse du précurseur solide selon l'invention, le support se présente généralement à l'état d'une poudre de granulométrie caractérisée par :

- un diamètre moyen D de 10 à 1000 μm, typiquement de 20 à 500 μm, les valeurs de 40 à 200 μm étant les plus courantes;
- un écart type σ de 10 à 50 μm, avantageusement de 20 à 40 μm.

Dans cette variante avantageuse, le précurseur solide selon l'invention comprend avantageusement le support en une quantité telle que le rapport pondéral du support au métallocène neutre soit au moins égal à 0,1, de préférence à 5; il est souhaitable que ce rapport n'excède pas 1000, en particulier pas 100, les valeurs voisines de 10 étant recommandées.

Le précurseur solide suivant cette variante de l'invention présente l'avantage de procurer des sytèmes catalytiques qui, lors de leur utilisation pour la polymérisation d'oléfines, réduisent les risques de croûtage dans le réacteur de polymérisation et permettent un meilleur réglage de la morphologie du polymère obtenu.

Le précurseur solide suivant l'invention comprend en outre un composé catalytique en plus du métallocène neutre et de l'agent ionisant. Ce composé catalytique peut être choisi parmi les halogénures ou oxyhalogénures d'un métal de transition choisi parmi les groupes IVB et VB du tableau périodique, et parmi les composés comprenant un métal de transition choisi parmi les groupes IIIB, IVB, VB ou VIB du tableau périodique, du magnésium et un halogène, et qui sont obtenus en mélangeant un composé de magnésium avec un composé du métal de transition et un composé halogéné. L'halogène peut éventuellement faire partie intégrante du composé de magnésium ou du composé du métal de transition. Dans le cas où l'halogène ne fait pas partie intégrante du composé de magnésium ou du composé du métal de transition, le composé halogéné peut par exemple être choisi parmi les dérivés halogénés d'aluminium tels que par exemple le dichlorure d'éthylaluminium, le chlorure de dipropylaluminium ou le trichlorure d'aluminium. Le composé catalytique comprend avantageusement :

- de 10 à 30 % en poids du métal de transition choisi parmi les groupes IIIB, IVB, VB ou VIB du tableau périodique, de préférence de 15 à 20 % en poids, typiquement environ 17 % en poids,
- de 20 à 50 % en poids de l'halogène, les valeurs de 30 à 40 % en poids (par exemple environ 40 % en poids) étant préférées,
- de 0,5 à 20 % en poids de magnésium, en général de 0,5 à 20 % en poids, les valeurs de 1 à 10 % en poids, par exemple environ 5 %, étant les plus courantes, le solde étant généralement constitué d'éléments provenant des produits utilisés pour leur fabrication tels que du carbone, de l'hydrogène et de l'oxygène.

Il peut aussi contenir en outre de 0,5 à 20 % en poids d'aluminium, en général de 0,5 à 5 % en poids, les valeurs de 1 à 3 % étant les plus courantes. Le métal de transition et l'halogène sont de préférence le titane et le chlore.

Le précurseur solide comprend avantageusement le composé catalytique en une quantité telle que le rapport pondéral de ce composé catalytique au métallocène neutre soit au moins égal à 0,05, de préférence à 0,5; il est souhaitable qu'il n'excède pas 1000, en particulier 100.

Il va de soi que le précurseur solide selon l'invention peut comprendre plus d'un métallocène neutre, plus d'un agent ionisant plus d'un composé catalytique et, le cas échéant plus d'un support.

Le précurseur solide selon l'invention présente une stabilité particulièrement élevée et peut dès lors être préparé

à l'avance et conservé sans risque de désactivation pendant au moins 24 heures, en général au moins une semaine, typiquement au moins un mois. Le précurseur solide selon l'invention présente notamment une stabilité supérieure à 0,95, définie par le rapport entre, d'une part, le poids de polyéthylène obtenu en polymérisant, pendant une heure, de l'éthylène sous une pression partielle de 1 bar en présence d'un système catalytique incorporant, dans un rapport pondéral de 0,1 à 10, un composé organométallique et ledit précurseur ayant subi, après mélange du métallocène neutre halogéné et de l'agent ionisant, un stockage de 48 heures à température ambiante, en atmosphère d'azote et, d'autre part, le poids de polyéthylène obtenu en polymérisant, pendant une heure, de l'éthylène sous une pression partielle de 1 bar en présence du même système catalytique, dans lequel le précurseur n'a pas subi de stockage. L'invention supprime ainsi la nécessité de mélanger le métallocène neutre halogéné et l'agent ionisant in situ dans le réacteur de polymérisation, au moment de la polymérisation.

L'invention a également pour objet un procédé de préparation d'un précurseur solide d'un système catalytique convenant pour la polymérisation d'oléfines, selon lequel on mélange au moins un composé à base d'un métallocène neutre, dérivé d'un métal de transition, au moins un composé catalytique et au moins un composé à base d'un agent ionisant; selon l'invention, le métallocène neutre est à l'état halogéné, le métal de transition étant lié à au moins un atome d'halogène, et on effectue le mélange dans un milieu hétérogène.

Par un milieu hétérogène on entend désigner un milieu comprenant le composé à base d'un agent ionisant et le composé à base d'un métallocène neutre, dans lequel au moins 80 % (de préférence au moins 95 %) d'un au moins de ces deux composés se trouve à l'état solide. Ce milieu hétérogène peut être essentiellement solide et obtenu en mélangeant, en l'absence d'un liquide, les deux composés précités à l'état solide, généralement à l'état de poudres. En variante, le milieu hétérogène peut contenir une phase liquide et être constitué d'une suspension comprenant un liquide organique dans lequel au moins 80 % (de préférence au moins 95 %) d'un au moins des deux composés (le composé à base d'un agent ionisant et le composé à base d'un métallocène neutre) est insoluble. Comme liquide organique on peut utiliser un hydrocarbure aliphatique choisi parmi les alcanes linéaires (par exemple le n-butane, le n-hexane et le n-heptane), les alcanes ramifiés (par exemple l'isobutane, l'isopentane, l'isooctane et le 2,2-diméthylpropane), et les cycloalcanes (par exemple le cyclopentane et le cyclohexane). Les hydrocarbures aromatiques monocycliques tels que le benzène et ses dérivés, par exemple le toluène, et les hydrocarbures aromatiques polycycliques, chaque cycle pouvant être substitué, conviennent également, pour autant qu'on soit dans un milieu hétérogène tel que défini ci-avant.

Dans le procédé de préparation selon l'invention, le métallocène neutre et l'agent ionisant sont conformes à ceux décrits ci-avant. Par "composé à base d'un métallocène neutre", on entend désigner le métallocène neutre pur ou un composé mixte comprenant le métallocène neutre et au moins une autre substance solide différente du métallocène neutre et de l'agent ionisant et inerte vis-à-vis de ceux-ci. Par "composé à base d'un agent ionisant", on entend désigner l'agent ionisant pur ou un composé mixte comprenant l'agent ionisant et au moins une autre substance solide différente de l'agent ionisant et du métallocène neutre et inerte vis-à-vis de ceux-ci. Ces substances solides peuvent être du type polymérique (tel que les polymères d'oléfines) ou minéral (tel que les oxydes métalliques et les halogénures de métaux). Ces composés mixtes respectifs peuvent par exemple être obtenus par mélange mécanique à l'état solide du métallocène neutre ou de l'agent ionisant avec la substance solide. En variante, ils peuvent être obtenus par imprégnation de la substance solide avec une solution du métallocène neutre respectivement de l'agent ionisant. On peut aussi utiliser le métallocène neutre et l'agent ionisant à l'état pur.

Dans le procédé selon l'invention de préparation d'un précurseur solide, au moins un des deux composés (le composé à base d'un métallocène neutre et le composé à base d'un agent ionisant) est mis en oeuvre à l'état solide, généralement à l'état d'une poudre. Dans le cas où les deux composés sont mis en oeuvre à l'état de poudres, ces poudres présentent de préférence une granulométrie appropriée pour que leur mélange reste homogène sans qu'il se produise une ségrégation de phases. A cet effet, le composé à base d'un agent ionisant et le composé à base d'un métallocène neutre ont préférentiellement des granulométries du même ordre de grandeur, caractérisées par exemple par un diamètre moyen D de 1 à 100 μm et un écart type de 5 à 25 μm.

Dans le procédé selon l'invention de préparation d'un précurseur solide, il peut s'avérer nécessaire de sécher les poudres du composé à base d'un métallocène neutre et/ou du composé à base d'un agent ionisant, préalablement à leur mélange, ce qui peut être obtenu par exemple par traitement avec un composé hydrophile ou par chauffage à une température inférieure à la température de décomposition de ces poudres et pendant une durée suffisante pour enlever toute trace d'humidité des poudres.

Les quantités du composé à base d'un métallocène et du composé à base d'un agent ionisant mises en oeuvre dans le procédé selon l'invention de préparation d'un précurseur solide, sont habituellement dans un rapport molaire de 0,5 à 2; elles sont de préférence équimolaires.

Dans le procédé selon l'invention de préparation d'un précurseur solide, le mélange du composé à base d'un métallocène neutre avec le composé à base d'un agent ionisant peut être effectué par tout moyen connu approprié pour autant qu'il soit réalisé dans un milieu hétérogène, par exemple dans un mélangeur muni d'un agitateur, dans un réacteur à lit tournant, ou dans un réacteur à lit agité ou fluidisé ou encore dans un réacteur rotatif. En général, dans

le cas où le mélange est effectué en l'absence d'un liquide organique, il s'avère souhaitable de réaliser le mélange du composé à base d'un métallocène neutre avec le composé à base d'un agent ionisant en les broyant ensemble. On opère de préférence dans un réacteur rotatif ou dans un mélangeur muni d'un agitateur.

La température à laquelle ce mélange est effectué peut être toute température inférieure à la température de décomposition du métallocène neutre et du composé à base d'un agent ionisant. La température dépend dès lors de la nature de ces constituants; elle est généralement au moins égale à 0 °C, de préférence à 20 °C; les valeurs au maximum égales à 100 °C étant les plus courantes, celles inférieures à 60 °C, par exemple 50 °C, étant les plus avantageuses. Dans le cas où le milieu hétérogène est une suspension comprenant un liquide organique, la température doit être telle qu'au moins 80 % (de préférence au moins 90 %) d'un des deux composés (le composé à base d'un agent ionisant et le composé à base d'un métallocène neutre) soit insoluble dans le liquide organique. Le mélange peut être réalisé à une température constante ou à une température variable de manière continue ou discontinue.

Dans le procédé selon l'invention de préparation d'un précurseur solide, la durée pendant laquelle le mélange est effectué doit être suffisante pour homogénéiser le mélange au maximum. La durée du mélange va dépendre du mélangeur utilisé. Elle est généralement au moins égale à 1 min, de préférence à 5 h; pour des considérations d'ordre économique, il est souhaitable qu'elle n'excède pas 100 h, en particulier pas 50 h. Une durée d'environ 24 h convient particulièrement bien.

Dans la variante du procédé selon l'invention de préparation d'un précurseur solide, où le milieu hétérogène est essentiellement solide, le composé à base d'un métallocène neutre et le composé à base d'un agent ionisant sont de préférence mélangés sous une atmosphère inerte. Celle-ci peut être constituée d'azote, d'argon, d'hélium ou d'un mélange de deux ou plusieurs de ces gaz.

Le procédé selon l'invention de prépartion d'un précurseur solide présente la particularité avantageuse de produire des précurseurs stables de systèmes catalytiques, le contact du métallocène neutre avec l'agent ionisant étant réalisé en l'absence d'un composé organoaluminique, ce qui rend sa réalisation particulièrement simple. En outre, les systèmes catalytiques obtenus avec ces précurseurs présentent une activité d'au moins 140 (exprimée en grammes de polymère obtenus par heure et par gramme de précurseur solide mis en oeuvre et divisés par la pression partielle de l'oléfine exprimée en bar) dans les procédés de polymérisation des oléfines.

Dans une première forme de réalisation spécialement préférée du procédé selon l'invention de préparation d'un précurseur solide, on mélange en outre avec le composé à base d'un métallocène neutre et le composé à base d'un agent ionisant, un composé catalytique et, dans le cas échéant, un support. Ceux-ci sont conformes au support et au composé catalytique décrits plus haut. Dans cette forme de réalisation, on met avantageusement en oeuvre une quantité de support (respectivement de composé catalytique) telle que le rapport pondéral du support (respectivement du composé catalytique) au composé à base d'un métallocène neutre soit au moins égal à 0,05, de préférence à 2; il est souhaitable qu'il n'excède pas 1000, en particulier pas 100, les valeurs voisines de 10 étant recommandées.

Dans cette forme de réalisation du procédé selon l'invention de préparation d'un précurseur solide, le mélange doit être opéré à une température inférieure à la température de décomposition du composé catalytique et, dans le cas échéant, du support.

Dans une première variante de cette forme de réalisation, le composé à base d'un métallocène neutre, le composé à base d'un agent ionisant et le composé catalytique et, dans le cas échéant, le support sont mélangés simultanément dans les conditions (appareillage, température, durée, atmosphère) décrites plus haut.

Dans une deuxième variante de cette forme de réalisation, on effectue le mélange en plusieurs étapes consécutives, deux des constituants du précurseur solide (composé à base d'un métallocène neutre, composé à base d'un agent ionisant, composé catalytique et, le cas échéant, le support étant mélangés dans une première étape, les autres constituants étant ajoutés dans une ou plusieurs étapes subséquentes. Dans le cas où le précurseur solide contient trois constituants, il peut s'avérer avantageux de mélanger d'abord le composé à base d'un métallocène neutre avec le composé catalytique et y ajouter ensuite le composé à base d'un agent ionisant. Dans ce cas, la première étape est avantageusement effectuée à une température de 10 à 120 °C, typiquement de 20 à 90 °C, par exemple environ 60 °C. La deuxième étape est le plus souvent réalisée à une température inférieure à celle de la première étape, par exemple à une température de 0 à 60 °C, typiquement de 20 à 50 °C.

Dans une troisième variante spécialement préférée de cette forme de réalisation, on effectue le mélange en plusieurs étapes consécutives, le composé à base d'un métallocène neutre étant mélangé, dans une première étape, avec le composé catalytique et, le cas échéant, le support à l'état de poudre en l'absence d'un liquide, le mélange solide ainsi obtenu étant ensuite, dans une deuxième étape, imprégné avec une solution du composé à base d'un agent ionisant. Dans cette deuxième étape, au moins 80 % (de préférence au moins 90 %) du composé à base d'un métallocène neutre est insoluble dans le solvant de la suspension. Dans cette variante préférée, la première étape est avantageusement effectuée à une température de 10 à 120 °C, typiquement de 40 à 100 °C, par exemple environ 80 °C. La deuxième étape est le plus souvent réalisée à une température inférieure à celle de la première étape, par exemple à une température de O à 60 °C. La température ambiante convient bien.

Dans une deuxième forme de réalisation du procédé selon l'invention de préparation d'un précurseur solide, le

composé à base d'un métallocène neutre comprend à titre de substance solide différente du métallocène neutre et de l'agent ionisant, un support et/ou un composé catalytique solide. Ceux-ci sont conformes au support et au composé catalytique décrits plus haut. Dans cette deuxième forme de réalisation, le composé à base d'un métallocène neutre peut être obtenu par imprégnation du support et/ou du composé catalytique avec une solution du métallocène neutre dans un solvant organique. Celui-ci est de préférence choisi parmi les hydrocarbures aromatiques tels que le toluène.

Dans une troisième forme de réalisation particulièrement intéressante du procédé selon l'invention de préparation d'un précurseur solide, le composé à base d'un agent ionisant comprend à titre de substance solide différente de l'agent ionisant et du métallocène neutre, un support et/ou un composé catalytique. Ceux-ci sont conformes au support et au composé catalytique décrits plus haut. Dans cette troisième forme de réalisation, le composé à base d'un agent ionisant est avantageusement obtenu par imprégnation du support et/ou du composé catalytique avec une solution de l'agent ionisant dans un diluant hydrocarboné. Celui-ci est de préférence choisi parmi les hydrocarbures aromatiques tels que le toluène ou parmi les hydrocarbures aliphatiques halogénés tels que le chlorure de méthylène et le chloroforme.

Dans une quatrième forme de réalisation du procédé selon l'invention de préparation d'un précurseur solide, on met en oeuvre un métallocène neutre de formule $(C_p)_a(C_p')_bMX_x(-R_t-Si-R'R''R''')_z$, que l'on a préparé en faisant réagir un silane avec un composé de formule $(C_p)_a(C_p')_bMX_xH_z$ (où les symboles $C_p$, $C_p'$, M, X, a, b, x et z ont la même signification que celle donnée ci-avant à l'exception de z qui est différent de 0). Cette réaction a lieu de préférence dans un solvant adéquat. Des composés de formule $(C_p)_a(C_p')_bMX_xH_z$ ayant conduit à de très bons résultats, sont notamment ceux dérivés du zirconium, du titane et de l'hafnium, dont $C_p$ et $C_p'$ sont choisis parmi les radicaux cyclopentadiényle, indényle et fluorényle. On utilise de préférence ceux dérivés du zirconium. De préférence, X représente le chlore. Comme exemples de silanes utilisables dans cette forme d'exécution, on peut citer, l'allyldiméthylchlorosilane, l'allylméthyldiéthoxysilane, le 5-(dicycloheptényl)trichlorosilane, le 2-bromo-3-triméthylsilyl-1-propène, le 3-chloropropyldiméthylvinylsilane, le 2-(3-cyclohexényl)éthyltriméthoxysilane, le diphénylvinylchlorosilane, le vinyltriphénoxysilane, le vinyltrichlorosilane, le 2-(triméthylsilylméthyl)-1,3-butadiène et le 3-(triméthylsilyl)cyclopentène. Les silanes préférés sont les alkénylsilanes non chlorés tels que l'allyltriéthoxysilane, l'allyltriméthylsilane, le 5-(bicycloheptényl)triéthoxysilane, le vinyl(triméthoxy)silane et le 2-(3-cyclohexényl)éthyltriméthoxysilane. Le vinyl(triméthoxy)silane convient particulièrement bien. Le solvant de la réaction entre le silane et le composé de formule $(C_p)_a(C_p')_bMX_xH_z$ est avantageusement un hydrocarbure aromatique, de préférence le toluène. La température à laquelle cette réaction est effectuée peut varier de la température ambiante jusqu'à la température d'ébullition du solvant utilisé, par exemple de 20 à 100 °C. La température préférée est la température ambiante.

Dans une cinquième forme de réalisation du procédé selon l'invention de préparation d'un précurseur solide, on met en oeuvre un métallocène neutre de formule $(C_p)_a(C_p')_bMX_xZ_z$ (où les symboles $C_p$, $C_p'$, M, X, a, b, x et z ont la même signification que celle donnée ci-avant, z étant différent de 0 et Z étant un radical hydrocarboné), que l'on a préparé en faisant réagir un composé de formule $(C_p)_a(C_p')_bMX_xH_z$ tel que défini plus haut, avec une oléfine. Cette réaction a lieu de préférence dans un solvant adéquat. Les oléfines utilisables dans cette forme d'exécution contiennent avantageusement jusqu'à 20 atomes de carbone, de préférence jusqu'à 12 atomes de carbone, et peuvent être choisies parmi les mono-oléfines telles que l'éthylène et le 3-éthyl-1-butène, les dioléfines non conjuguées telles que le 1,5-hexadiène, les dioléfines conjuguées telles que le 1,3-pentadiène et les dioléfines alicycliques telles que le dicyclopentadiényle. L'oléfine préférée est l'éthylène. Le solvant de la réaction entre l'oléfine et le composé de formule $(C_p)_a(C_p')_bMX_xH_z$ est avantageusement un hydrocarbure aromatique, de préférence le toluène. La température à laquelle cette réaction est effectuée peut varier de la température ambiante jusqu'à la température d'ébullition du solvant utilisé, par exemple de 20 à 100 °C. La température préférée est la température ambiante.

Le précurseur solide selon l'invention peut être utilisé en polymérisation tel qu'il est obtenu. Il peut toutefois s'avérer souhaitable de le soumettre à un broyage avant de le mettre en oeuvre en polymérisation.

Le précurseur solide selon l'invention trouve une application pour la polymérisation d'oléfines, en association avec un composé organométallique.

L'invention concerne dès lors également un système catalytique pour la polymérisation d'oléfines, obtenu par mise en contact d'un précurseur solide conforme à l'invention, tel que défini plus haut et d'un composé organométallique dérivé d'un métal choisi parmi les groupes IA, IIA, IIB, IIIA et IVA du tableau périodique.

Dans le système catalytique selon l'invention le composé organométallique dérivé d'un métal choisi parmi les groupes IA, IIA, IIB, IIIA et IVA du tableau périodique peut par exemple être sélectionné parmi les composés organométalliques du lithium, du magnésium, du zinc, de l'aluminium ou de l'étain. Les meilleurs résultats sont obtenus avec les composés organoaluminiques comprenant au moins une liaison aluminium-carbone et pouvant éventuellement comprendre de l'oxygène et/ou un halogène. On peut citer comme exemples les composés trialkylaluminium, les composés alkylaluminiques halogénés et les composés alkylaluminiques comprenant au moins un groupe alkoxy. Les composés organoaluminiques répondent avantageusement à la formule générale AlTT'T'' dans laquelle les groupes T, T' et T'' désignent chacun un groupe alkyle, alkényle, aryle ou alkoxy, éventuellement substitué, contenant jusqu'à 20 atomes de carbone. Il peut s'agir par exemple de triméthyl-, de triéthyl-, de tripropyl-, de triisopropyl-, de tributyl-,

de triisobutyl-, de trihexyl-, de trioctyl- et de tridodécylaluminium. Le triéthylaluminium et le triisobutylaluminium conviennent particulièrement bien.

On préfère le triméthylaluminium. Celui-ci s'avère particulièrement performant car il permet de réduire voire éliminer le phénomène de croûtage dans le réacteur de polymérisation. En général, le croûtage se produit lorsque l'on utilise des systèmes catalytiques hautement productifs et/ou lorsque l'on polymérise en présence d'hydrogène et éventuellement un ou plusieurs comonomères dans le réacteur de polymérisation.

L'utilisation de triméthylaluminium à titre de composé organométallique dans le système catalytique selon l'invention, présente l'avantage par comparaison avec d'autres composés trialkylaluminium d'augmenter l'activité catalytique tout en diminuant le phénomène de croûtage, même en présence d'hydrogène et/ou un ou plusieurs comonomères. Son effet sur la réduction du croûtage est donc d'autant plus imprévisible.

Dans le système catalytique selon l'invention, la quantité de composé organométallique mise en oeuvre peut varier dans une large mesure. Elle est en général telle que le rapport molaire du composé organométallique au métallocène neutre soit au moins égale à 5. En pratique toutefois, on n'a pas intérêt à ce que ce rapport excède 5000, les valeurs inférieures à 2000 étant recommandées. Des valeurs voisines de 10 à 500 conviennent généralement bien lorsque le système catalytique est destiné à la polymérisation d'oléfines.

Le système catalytique selon l'invention peut être utilisé pour l'homopolymérisation et la copolymérisation d'oléfines contenant jusqu'à 20 atomes de carbone par molécule. Les oléfines contiennent avantageusement de 2 à 12 atomes de carbone par molécule et sont par exemple choisies parmi l'éthylène, le propylène, le 1-butène, le 1-pentène, le 3-méthyl-1-butène, le 1-hexène, les 3- et 4-méthyl-1-pentènes, le 1-octène, le 3-éthyl-1-butène, le 1-heptène, le 3,4-diméthyl-1-hexène, le 4-butyl-1-octène, le 5-éthyl-1-décène et le 3,3-diméthyl-1-butène, et les monomères vinyliques tels que le styrène. Les systèmes catalytiques selon l'invention trouvent une utilisation particulière dans la production d'homopolymères de l'éthylène et du propylène, ou de copolymères de l'éthylène et du propylène avec un ou plusieurs comonomères oléfiniquement insaturés. Les comonomères peuvent être de matières diverses. Ils peuvent être des monooléfines pouvant comprendre jusqu'à 8 atomes de carbone, par exemple le 1-butène, le 1-pentène, le 3-méthyl-1-butène, le 1-hexène, les 3- et 4-méthyl-1-pentènes et le 1-octène. Une ou plusieurs dioléfines comprenant de 4 à 18 atomes de carbone peuvent également être copolymérisées avec l'éthylène et le propylène. De préférence, les dioléfines sont choisies parmi les dioléfines aliphatiques non conjuguées telles que le 4-vinylcyclohexène et le 1,5-hexadiène, les dioléfines alicycliques ayant un pont endocyclique telles que le dicyclopentadiène, le méthylène- et l'éthylidène-norbornène, et les dioléfines aliphatiques conjuguées telles que le 1,3-butadiène, l'isoprène et le 1,3-pentadiène.

Le système catalytique selon l'invention apparaît particulièrement performant pour la fabrication d'homopolymères de l'éthylène ou du propylène, et de copolymères de l'éthylène ou du propylène contenant au moins 90 %, de préférence au moins 95 %, en poids d'éthylène ou de propylène. Les comonomères préférés de l'éthylène sont le propylène, le 1-butène, le 1-hexène, le 1-octène et le 1,5-hexadiène et leurs mélanges, et ceux du propylène sont l'éthylène, le 1,3-butadiène, le 1,5-hexadiène et leurs mélanges.

Le système catalytique selon l'invention se caractérise par une activité catalytique intéressante.

La présente invention concerne dès lors aussi un procédé de polymérisation d'au moins une oléfine dans lequel on utilise un système catalytique conforme à l'invention, tel que défini plus haut.

Selon l'invention il n'est pas indispensable d'utiliser un solvant aromatique au moment de la polymérisation.

Selon une forme d'exécution particulièrement avantageuse du procédé de polymérisation suivant l'invention, on mélange d'abord l'oléfine avec le composé organométallique du système catalytique et on ajoute ensuite au mélange ainsi obtenu le précurseur solide dudit système catalytique. Dans cette forme d'exécution avantageuse du procédé de polymérisation selon l'invention, le composé organométallique est en général mis en oeuvre sous forme d'une solution dans un diluant hydrocarboné. Ce diluant hydrocarboné peut être choisi parmi les hydrocarbures aliphatiques tels que les alcanes linéaires (par exemple le n-butane, le n-hexane et le n-heptane), les alcanes ramifiés (par exemple l'isobutane, l'isopentane, l'isooctane et le 2,2-diméthylpropane) et les cycloalcanes (par exemple le cyclopentane et le cyclohexane). On opère de préférence dans de l'isobutane ou de l'hexane.

Dans cette forme d'exécution avantageuse du procédé de polymérisation selon l'invention, dès le moment où on met le précurseur solide en contact avec le diluant hydrocarboné, le métallocène neutre, l'agent ionisant et le composé organoaluminique réagissent de manière à transformer le métallocène neutre en une substance catalytique active à l'état ionisé.

Cette forme d'exécution du procédé de polymérisation selon l'invention présente l'avantage de ne pas impliquer la présence d'un solvant aromatique dans le réacteur de polymérisation.

Dans une variante de cette forme d'exécution particulière du procédé de polymérisation selon l'invention, visant à copolymériser au moins deux oléfines, on introduit les deux oléfines simultanément ou en différé dans le réacteur de polymérisation avant l'ajout du précurseur solide du système catalytique.

Dans le procédé de polymérisation suivant l'invention, la polymérisation peut être effectuée indifféremment en solution, en suspension ou en phase gazeuse, et peut être réalisée en continu ou en discontinu, par exemple en

effectuant une polymérisation en suspension dans un premier réacteur suivie d'une polymérisation en phase gazeuse dans un second réacteur ou en opérant en phase gazeuse dans deux réacteurs consécutifs. En variante, on peut également réaliser la polymérisation dans plusieurs réacteurs disposés en série, la température et/ou la pression dans le premier réacteur étant différentes de celles régnant dans les autres réacteurs. Dans la polymérisation on peut éventuellement mettre en oeuvre un régulateur du poids moléculaire tel que l'hydrogène et le diéthylzinc.

Dans le cas d'une polymérisation en suspension, celle-ci est effectuée dans un diluant hydrocarboné à une température telle qu'au moins 80 % (de préférence au moins 95 %) du (co)polymère formé y soit insoluble. Le diluant hydrocarboné peut être choisi parmi les hydrocarbures aliphatiques, cycloaliphatiques et aromatiques liquides. Les diluants préférés sont les alcanes linéaires tels que le n-butane, le n-hexane et le n-heptane, ou les alcanes ramifiés tels que l'isobutane, l'isopentane, l'isooctane et le 2,2-diméthylpropane, ou les cycloalcanes tels que le cyclopentane et le cyclohexane ou leurs mélanges. La température est généralement au moins égale à 20 °C, de préférence au moins 50 °C; elle est habituellement au maximum égale à 200 °C, de préférence au maximum 100 °C. La pression partielle d'oléfine est le plus souvent au moins égale à la pression atmosphérique, de préférence $\geq$ 0,4 MPa, par exemple $\geq$ 0,6 MPa; cette pression est en général au maximum égale à 5 MPa, de préférence $\leq$ 2 MPa, par exemple $\leq$ 1,5 MPa.

Dans le cas d'une polymérisation en solution, celle-ci peut être réalisée dans un diluant hydrocarboné tel que ceux cités ci-avant. La température opératoire dépend du diluant hydrocarboné utilisé et doit être supérieure à la température de dissolution du polymère dans celui-ci, de sorte qu'au moins 80 % (de préférence au moins 95 %) du polymère y soit dissous. Par ailleurs la température doit être suffisamment basse pour empêcher une dégradation thermique du polymère et/ou du système catalytique. En général, la température optimale est de 100 à 200 °C. La pression partielle d'oléfine est le plus souvent au moins égale à la pression atmosphérique, de préférence $\geq$ 0,4 MPa, par exemple $\geq$ 0,6 MPa; cette pression est en général au maximum égale à 5 MPa, de préférence $\leq$ 2 MPa, par exemple $\leq$ 1,5 MPa. En variante, la polymérisation est effectuée en utilisant l'oléfine elle-même comme diluant hydrocarboné. Dans cette variante on peut utiliser une oléfine liquide dans les conditions normales de pression et de température, ou opérer sous une pression suffisante pour qu'une oléfine normalement gazeuse soit liquéfiée.

Dans le cas où la polymérisation est effectuée en phase gazeuse, celle-ci peut être réalisée dans un lit fluidisé. A cet effet, on utilise un courant gazeux comprenant l'oléfine et on le met en contact avec le système catalytique dans le lit fluidisé. Dès lors le débit du courant gazeux doit être suffisant pour maintenir le polymère en fluidisation et dépend de la vitesse de formation de celui-ci et de la vitesse à laquelle le système catalytique est consommé. La pression partielle de l'oléfine peut être inférieure ou supérieure à la pression atmosphérique, la pression partielle préférée variant de la pression atmosphérique à environ 7 MPa. En général, une pression de 0,2 à 5 MPa convient bien. Le choix de la température n'est pas critique, celle-ci est en général de 30 à 200 °C. On peut éventuellement utiliser un gaz de dilution, qui doit être inerte vis-à-vis du polymère.

Le procédé de polymérisation selon l'invention est particulièrement performant pour la fabrication d'homopolymères de l'éthylène et du propylène, et de copolymères de l'éthylène et/ou du propylène.

Les exemples dont la description suit, servent à illustrer l'invention. Dans ces exemples on a fabriqué un précurseur solide conforme à l'invention, au moyen du procédé selon l'invention, et on l'a ensuite utilisé pour polymériser de l'éthylène.

La signification des symboles utilisés dans ces exemples, les unités exprimant les grandeurs mentionnées et les méthodes de mesure de ces grandeurs sont explicitées ci-dessous.

HLMI = indice de fluidité du polymère fondu à 190 °C, mesuré sous une charge de 21,6 kg et exprimé en g/10 min suivant la norme ASTM D 1238.

$\alpha$ = activité catalytique exprimée en grammes de polymère, obtenus par heure et par gramme de précurseur solide mis en oeuvre et divisés par la pression partielle de l'oléfine exprimée en bar.

PSA = poids spécifique apparent du polymère exprimé en g/$dm^3$ et mesuré par écoulement libre selon le mode opératoire suivant : dans un récipient cylindrique de 50 $cm^3$ de capacité, on verse la poudre de polymère à analyser en évitant de la tasser, depuis une trémie dont le bord inférieur est disposé 20 mm au-dessus du bord supérieur du récipient. On pèse ensuite le récipient rempli de la poudre, on déduit la tare du poids relevé et on divise le résultat obtenu (exprimé en g) par 50.

$M_z$ = masse moléculaire moyenne du polymère définie par la relation

$$M_z = \frac{\Sigma\, w_i M_i^2}{\Sigma\, w_i M_i}$$

où $w_i$ désigne le poids du polymère de masse moléculaire $M_i$. La grandeur $M_z$ est mesurée par chromatographie d'exclusion stérique réalisée dans le 1,2,4-trichlorobenzène à 135 °C sur un chromatographe de la

société WATERS type 150 C.

F0 = fraction en oligomères du polymère exprimée en gramme d'oligomères par kilo de polymère et mesurée par extraction pendant 2 h à l'hexane à sa température d'ébullition.

<M> = teneur en métal de transition M du polymère exprimée en ppm en poids et mesurée par diffraction des rayons X.

HVS = masse volumique standard du polymère exprimé en $kg/m^3$ et mesurée selon la norme ASTM D 1928.

SS = surface spécifique du précurseur solide exprimée en $m^2/g$ et mesurée selon la norme britannique BS 4359/1.

VP = volume poreux du précurseur solide mesuré par la méthode de pénétration à l'azote au moyen de porosimètres commercialisés par CARLO ERBA CO et exprimé en $cm^3/g$.

$M_w/M_n$= rapport entre la masse moléculaire moyenne en poids ($M_w$) et la masse moléculaire moyenne en nombre ($M_n$) mesuré par chromatographie d'exclusion stérique réalisée dans le 1,2,4-trichlorobenzène à 135 °C sur un chromatographe de la société WATERS type 150 C.

Exemple 1 (pas conforme à l'invention)

Dans cet exemple on a fabriqué un précurseur solide constitué d'un métallocène neutre halogéné, d'un agent ionisant et d'un support minéral. Ensuite on l'a utilisé pour la fabrication d'un homopolymère d'éthylène.

A. Préparation du précurseur solide

(a) Préparation du support

On a préparé le support en mélangeant une poudre de silice (présentant un diamètre moyen D de 112 µm et un écart type σ de 33 µm), préactivée pendant 16 heures à 600 °C sous air sec, avec une poudre de dichlorure de magnésium en des quantités telles que leur mélange contienne 9,8 % en poids de magnésium. Ce mélange a été chauffé dans un four rotatif pendant 16 heures à 400 °C sous balayage d'azote.

(b) Préparation du mélange binaire support-métallocène neutre halogéné

On a préparé un mélange de 3,9 g du support obtenu en (a) avec 389 mg d'une poudre de dicyclopentadiényl-dichlorozirconium, dans un mélangeur rotatif que l'on a laissé tourner pendant 10 heures, à 50 °C sous azote. On a poursuivi le mélange dans un récipient muni d'un agitateur magnétique pendant encore 5 heures à 85 °C sous azote.

(c) Préparation du mélange ternaire support-métallocène-agent ionisant

On a mélangé 1,2 g de la poudre obtenue en (b) avec 366 mg d'une poudre de tétrakispentafluorophénylborate de triphénylcarbénium, dans un récipient muni d'un agitateur magnétique pendant 20 heures à température ambiante sous azote.

Le précurseur ainsi obtenu comprenait (% en poids) :

| | |
|---|---|
| Cl | 14,3 |
| Zr | 1,7 |
| Mg | 4,7 |

et présentait une surface spécifique SS de 167 et un volume poreux VP de 1,07.

B. Polymérisation de l'éthylène

On a introduit dans un autoclave de 3 litres de capacité, muni d'un agitateur, 1 l d'isobutane et 1 mmole de triéthylaluminium. La température a été portée à 50 °C. Ensuite on y a introduit de l'éthylène jusqu'à une pression de 1 MPa. La température et la pression d'éthylène ont été maintenues constantes pendant la durée de la polymérisation. Puis on y a introduit 100 mg du précurseur solide obtenu en A. Après 30 minutes, l'autoclave a été dégazé et refroidi. 123 g de polyéthylène ont été recueillis, présentant les caractéristiques suivantes :

| | |
|---|---|
| HLMI = | 0,12 |
| PSA = | 124 |

(suite)

| | |
|---|---|
| MVS = | 939,9 |
| F0 = | 0,8 |
| <Zr> = | 16,5 |
| $M_z$ = | 2.313.000 |
| $M_w/M_n$ = | 7,4. |

Le système catalytique a présenté une activité α de 246.

Exemple 2 (conforme à l'invention)

Dans cet exemple on a fabriqué un précurseur solide constitué d'un métallocène neutre, d'un agent ionisant, d'un support minéral et d'un composé catalytique. Ensuite on l'a utilisé pour la fabrication d'un homopolymère d'éthylène.

A. Préparation du précurseur solide

(a) Préparation du composé catalytique

On a fait réagir du diéthylate de magnésium avec du tétrabutylate de titane en des quantités telles que le rapport molaire de magnésium au titane soit égal à 2. Ensuite, on a chloré le produit de réaction ainsi obtenu en le mettant en contact avec une solution de dichlorure d'éthylaluminium. On a recueilli un composé solide qui comprenait (% en poids) :

| | |
|---|---|
| Ti | 17,0 |
| Cl | 36,2 |
| Al | 1,9 |
| Mg | 4,5. |

(b) Préparation du mélange ternaire métallocène-support-composé catalytique

On a mélangé, dans un récipient muni d'un agitateur, pendant 12 heures à 60 °C sous azote, 511 mg du composé catalytique obtenu en (a) avec 3 g du produit obtenu à l'exemple 1, A (b).

(c) Préparation du mélange quaternaire métallocène-support-composé catalytique-agent ionisant

On a préparé un mélange de 3 g d'une poudre du mélange ternaire obtenu en (b) avec 807 mg d'une poudre de tétrakis(pentafluorophényl)borate de triphénylcarbénium, et on a maintenu le produit ainsi obtenu sous agitation pendant 48 heures à température ambiante sous azote.
Le précurseur solide ainsi obtenu comprenait (% en poids) :

| | |
|---|---|
| Cl | 13,0 |
| Zr | 1,8 |
| Ti | 2,4 |
| Al | 0,3 |
| Mg | 5,1 |

et présentait une surface spécifique SS de 92 et un volume poreux de 0,55.

B. Polymérisation de l'éthylène

On a introduit dans un autoclave de 3 litres de capacité, muni d'un agitateur, 1 l d'isobutane et 1 mmole de triéthylaluminium. La température a été portée à 50 °C. Ensuite on y a introduit de l'éthylène jusqu'à une pression de 1 MPa. La température et la pression d'éthylène ont été maintenues constantes pendant la durée de polymérisation. Puis on y a introduit 101 mg du précurseur solide obtenu en A. Après 30 minutes, l'autoclave a été dégazé et refroidi. 142 g de polymère ont été recueillis présentant les caractéristiques suivantes :

| | |
|---|---|
| HLMI = | 0,04 |
| PSA = | 162 |
| MVS = | 938 |
| F0 = | 0,8 |
| <Zr> = | 10,5 |
| <Ti> = | 15,6 |
| Mz = | 14.955.000 |
| $M_w/M_n$ = | 18,2. |

Le système catalytique a présenté une activité $\alpha$ de 282.

Exemple 3 (conforme à l'invention)

Dans cet exemple on a fabriqué un précurseur solide constitué d'un métallocène neutre halogéné, d'un agent ionisant et d'un composé catalytique. Ensuite on l'a utilisé pour la fabrication d'un copolymère d'éthylène.

A. Préparation du précurseur solide

(a) Préparation du mélange binaire métallocène-composé catalytique

On a mélangé 1,2 g d'une poudre du composé obtenu à l'exemple 2, A (a) avec 590 mg d'une poudre de dicyclopentadiényl-dichloro-zirconium dans un récipient muni d'un agitateur pendant 4 heures à 85 °C sous azote.

(b) Préparation du mélange ternaire métallocène-composé catalytique-agent ionisant

On a ajouté une poudre de tétrakis(pentafluorophényl)borate de triphénylcarbénium à la poudre obtenue en (a) en des quantités telles que le rapport molaire du métallocène neutre et de l'agent ionisant soit égal à 1. On a mélangé ces deux poudres dans un récipient muni d'un agitateur pendant 16 heures à température ambiante sous azote.
Le précurseur solide ainsi obtenu comprenait (% en poids) :

| | |
|---|---|
| Cl | 13,7 |
| Zr | 4,9 |
| Ti | 5,7. |

B. Copolymérisation de l'éthylène avec du butène

On a introduit dans un autoclave de 3 litres de capacité, muni d'un agitateur, 1 l d'isobutane et 1 mmole de triéthylaluminium. La température a été augmentée à 50 °C. Ensuite on y a introduit de l'éthylène jusqu'à une pression de 1 MPa et 3 g de butène liquide. La température et la pression d'éthylène ont été maintenues constantes pendant la durée de polymérisation. Puis on y a introduit 49 mg du précurseur solide obtenu en A. Après 60 minutes, l'autoclave a été dégazé et refroidi. 309 g de polymère ont été recueillis présentant les caractéristiques suivantes :

| | |
|---|---|
| HLMI = | 0,11 |
| PSA = | 243 |
| MVS = | 931,5 |
| F0 = | 0,5 |
| <Zr> = | 5 |
| Mz = | 1.700.000 |
| $M_w/M_n$ = | 32,0. |

Le système catalytique a présenté une activité $\alpha$ de 631.

Exemple 4 (conforme à l'invention)

Dans cet exemple on a utilisé le précurseur solide de l'exemple 3 pour la fabrication d'un homopolymère de l'éthylène.

Polymérisation de l'éthylène

On a introduit dans un autoclave de 3 litres de capacité, muni d'un agitateur, 1 l d'isobutane et 1 mmole de triéthylaluminium. La température a été augmentée à 50 °C. Ensuite on y a introduit de l'éthylène jusqu'à une pression de 1 MPa. La température et la pression d'éthylène ont été maintenues constantes pendant la durée de polymérisation. Puis on y a introduit 57 mg du précurseur solide de l'exemple 3. Après 60 minutes, l'autoclave a été dégazé et refroidi. 324 g de polyéthylène ont été recueillis présentant les caractéristiques suivantes :

| | |
|---|---|
| HLMI < | 0,1 |
| MVS = | 938 |
| F0 = | 0,2 |
| $M_z$ = | 3.783.000 |
| $M_w/M_n$ = | 60. |

Le système catalytique a présenté une activité $\alpha$ de 568.

Exemple 5 (pas conforme à l'invention)

Dans cet exemple on a fabriqué un précurseur solide constitué d'un métallocène neutre halogéné, d'un agent ionisant et d'un support minéral. Ensuite on l'a utilisé pour la fabrication d'un copolymère d'éthylène.

A. Préparation du précurseur solide

(a) Préparation du mélange binaire support-métallocène

On a préparé un mélange de 1,2 g du support obtenu dans l'exemple 1, A (a) avec 143,4 mg d'une poudre de dicyclopentadiényl-dichloro-zirconium, dans un récipient muni d'un agitateur que l'on a laissé tourner pendant 4 heures, à température ambiante sous azote.

(b) Préparation du mélange ternaire support-métallocène-agent ionisant

On a ajouté à la poudre obtenue en (a), 465,2 mg d'une poudre de tétrakispentafluorophénylborate de triphénylcarbénium, et on a mélangé ces deux poudres dans un récipient muni d'un agitateur pendant 16 heures à température ambiante sous azote. Le précurseur solide ainsi obtenu comprenait (% en poids) :

| | |
|---|---|
| Cl | 10,4 |
| Zr | 2,4 |

et présentait une surface spécifique SS de 170 et un volume poreux VP de 1,12.

B. Polymérisation de l'éthylène

On a introduit dans un autoclave de 3 litres de capacité, muni d'un agitateur, 1 l d'isobutane et 1 mmole de triéthylaluminium. La température a été portée à 50 °C. Ensuite on y a introduit de l'éthylène jusqu'à une pression de 1 MPa. La température et la pression d'éthylène ont été maintenues constantes pendant la durée de polymérisation. Puis on y a introduit 80 mg du solide obtenu en A. Après 60 minutes, l'autoclave a été dégazé et refroidi. 192 g de polymère ont été recueillis présentant les caractéristiques suivantes :

| | |
|---|---|
| HLMI = | 0,1 |
| PSA = | 144 |
| MVS = | 940,0 |

(suite)

| | |
|---|---|
| F0 = | 0,7 |
| <Zr> = | 8,5 |
| $M_z$ = | 1.216.000 |
| $M_w/M_n$ = | 4,7. |

Le système catalytique a présenté une activité α de 147.

Exemple 6 (pas conforme à l'invention)

Dans cet exemple on a fabriqué un précurseur solide constitué d'un métallocène neutre halogéné, d'un agent ionisant et d'un support minéral. Ensuite on l'a utilisé pour la fabrication d'un homopolymère d'éthylène.

A. Préparation du précurseur solide

(a) Préparation du support

On a répété les opérations de l'exemple 1 A (a).

(b) Préparation du mélange binaire support-agent ionisant

On a imprégné 3,8 g du support obtenu en (a) avec une solution contenant 1,4191 g de tétrakispentafluorophénylborate de triphénylcarbénium dans 40 ml de toluène à une température maximale de 45 °C. Ensuite on a éliminé le toluène par distillation sous pression réduite jusqu'à l'obtention d'une poudre.

(c) Préparation du mélange ternaire support-agent ionisant-métallocène neutre halogéné

On a mélangé la poudre obtenue en (b) avec 482,8 mg d'une poudre de dicyclopentadiényl-dichloro-zirconium, que l'on avait broyée au préalable dans un mélangeur rotatif à température ambiante pendant 70 h. Le mélange solide ainsi obtenu a ensuite été broyé à température ambiante pendant 4 h dans un récipient muni d'un agitateur magnétique.

B. Polymérisation de l'éthylène

On a introduit dans un autoclave de trois litres de capacité, muni d'un agitateur, 1 l d'isobutane et 1 mmole de triéthylaluminium. La température a été portée à 50 °C. Ensuite on y a introduit de l'éthylène jusqu'à une pression de 1 MPa. La température et la pression d'éthylène ont été maintenues constantes pendant la durée de la polymérisation. Puis on y a introduit 83 mg du précurseur solide obtenu en A. Après 60 minutes, l'autoclave a été dégazé et refroidi. 130 g de polyéthylène ont été recueillis, présentant la caractéristique suivante :
PSA = 243.
Le système catalytique a présenté une activité α de 156.

Exemple 7 (pas conforme à l'invention)

Dans cet exemple on a utilisé le précurseur solide de l'exemple 6 après un stockage de 6 jours à température ambiante et sous une atmosphère d'azote, pour la fabrication d'un homopolymère d'éthylène.

Polymérisation de l'éthylène

On a introduit dans un autoclave de 3 litres de capacité, muni d'un agitateur, 1 l d'isobutane et 1 mmole de triéthylaluminium. La température a été portée à 50 °C. Ensuite on y a introduit de l'éthylène jusqu'à une pression de 1 MPa. La température et la pression d'éthylène ont été maintenues constantes pendant la durée de polymérisation. Puis on y a introduit 84 mg du précurseur solide de l'exemple 6, que l'on avait stocké, après sa préparation, pendant 6 jours à température ambiante et sous atmosphère d'azote. Après 64 minutes, l'autoclave a été dégazé et refroidi. 167 g de polyéthylène ont été recueillis. Le système catalytique présentait une activité α de 186.

Les résultats des exemples 6 et 7 mettent en évidence la stabilité du précurseur selon l'invention.

Exemple 8 (pas conforme à l'invention)

Dans cet exemple on a fabriqué un précurseur solide constitué d'un métallocène neutre halogéné, d'un agent ionisant et d'un support minéral. Ensuite on l'a utilisé pour la fabrication d'un homopolymère d'éthylène.

A. Préparation du précurseur solide

(a) Préparation du support

On a mélangé dans un four rotatif 9,8 g d'une poudre de silice (présentant un diamètre moyen D de 112 µm et un écart type σ de 33 µm), préactivée pendant 6 heures à 600 °C sous azote, avec 1,2 g d'une poudre de dichlorure de magnésium anhydre pendant 16 heures à 400 °C sous une atmosphère d'azote.

(b) préparation du mélange binaire support-métallocène neutre halogéné

On a préparé, dans un mélangeur rotatif, un mélange de 2,6 g du support obtenu en (a) avec 306,2 mg d'une poudre de dicyclopentadiényl-dichloro-zirconium et 40 ml de toluène. Ensuite, on a éliminé le toluène par distillation sous pression réduite à une température variant de 70 à 80 °C pendant 2 heures. Puis, on a laissé tourner le mélangeur pendant encore 5 heures à une température variant de 70 à 80 °C, que l'on a continué pendant 66 heures à température ambiante et pendant 3 heures à une température variant de 70 à 80 °C, le mélange étant maintenu sous une atmosphère d'azote.

(c) Préparation du mélange ternaire support-métallocène-agent ionisant

On a imprégné le solide obtenu en (b) avec une solution de 966 mg de tétrakispentafluorophénylborate de triphénylcarbénium dans 60 ml de toluène à température ambiante. Ensuite on a éliminé le toluène par distillation sous pression réduite à 30 °C, et recueilli un précurseur solide, que l'on a agité dans un mélangeur rotatif pendant 17 heures à température ambiante.

B. Polymérisation de l'éthylène

On a introduit dans un autoclave de 3 litres de capacité, muni d'un agitateur, 1 l d'isobutane et 1 mmole de triéthylaluminium. La température a été portée à 50 °C. Ensuite on y a introduit de l'éthylène jusqu'à une pression de 1 MPa. La température et la pression d'éthylène ont été maintenues constantes pendant la durée de la polymérisation. Puis on y a introduit 78 mg du précurseur solide obtenu en A. Après 120 minutes, l'autoclave a été dégazé et refroidi. 213 g de polyéthylène ont été recueillis, présentant la caractéristique suivante :
PSA = 281.
Le système catalytique a présenté une activité α de 137.

L'exemple 9, dont la description suit, est un exemple de comparaison. Il sert à montrer l'importance d'incorporer l'agent ionisant au précurseur solide du système catalytique, avant la polymérisation.

Exemple 9 (donné à titre de comparaison)

A. Préparation d'un précurseur solide de catalyseur

On a répété les opérations A (a) et (b) de l'exemple 1, à l'exception de l'opération (c).

B. Polymérisation de l'éthylène

On a introduit dans un autoclave de 3 litres de capacité, muni d'un agitateur, 1 l d'isobutane et 1 mmole de triéthylaluminium. La température a été portée à 70 °C. Ensuite on y a introduit de l'éthylène jusqu'à une pression de 0,6 MPa. Puis on y a introduit 87 mg du précurseur solide obtenu en A. La température et la pression d'éthylène ont été maintenues contantes pendant 10 minutes. Ensuite, ta température a été diminuée à 50 °C et la pression partielle en éthylène augmentée à 1 MPa. Puis on y a injecté 0,002 mmole de tétrakis(pentafluorophényl)borate de triphénylcarbénium (agent ionisant). La température et la pression partielle d'éthylène ont été maintenues constantes à ces nouvelles valeurs pendant encore 30 minutes. Après, l'autoclave a été dégazé et refroidi. 114 g de polymère ont été recueillis présentant les caractéristiques suivantes :

| | |
|---|---|
| HLMI = | 0,07 |
| PSA = | 82 |
| MVS = | 938,3 |
| F0 = | 0,8 |
| <Zr> = | 13,5 |
| $M_z$ = | 1.199.000 |
| $M_w/M_n$ = | 4,6. |

Une comparaison des résultats de l'exemple 9 avec ceux de l'exemple 1 fait apparaître le progrès apporté par l'invention pour ce qui concerne la masse moléculaire moyenne et le poids spécifique apparent du polymère.

Exemple 10 (pas conforme à l'invention)

Dans cet exemple on a fabriqué un précurseur solide constitué d'un métallocène neutre halogéné, d'un agent ionisant et d'un support minéral. Ensuite on l'a utilisé pour la fabrication d'un homopolymère d'éthylène.

A. Prépartion du précurseur solide

(a) Préparation du support

On a mélangé dans un four rotatif 9,8 g d'une poudre de silice (présentant un diamètre moyen D de 112 µm et un écart type σ de 33 µm), préactivée pendant 6 heures à 600 °C sous azote, avec 1,2 g d'une poudre de dichlorure de magnésium anhydre pendant 16 heures à 400 °C sous une atmosphère d'azote.

(b) préparation du mélange binaire support-métallocène neutre halogéné

On a préparé, dans un mélangeur rotatif, un mélange de 2,0 g du support obtenu en (a) avec 239,7 mg d'une poudre de dicyclopentadiényl-dichloro-zirconium et 20 ml de toluène. Ensuite, on a éliminé le toluène par distillation sous pression réduite à une température de 70 °C pendant 45 minutes. Puis, on a laissé tourner le mélangeur pendant encore 10 minutes à une température de 70 °C. On a recueilli un solide et on a immédiatement effectué l'étape (c) décrite ci-après.

(c) Préparation du mélange ternaire support-métallocène-agent ionisant

On a imprégné le solide obtenu en (b) avec une solution de 750 mg de tétrakispentafluorophénylborate de triphénylcarbénium dans 20 ml de toluène à température ambiante. Ensuite on a éliminé te toluène par distillation sous pression réduite à température ambiante, et recueilli un précurseur solide.

B. Polymérisation de l'éthylène

On a introduit dans un autoclave de 3 litres de capacité, muni d'un agitateur, 1 mmole de triméthylaluminium et 1 l d'isobutane. La température a été portée à 50 °C. Ensuite on y a introduit de l'hydrogène à une pression partielle de 0,17 MPa et ensuite de l'éthylène jusqu'à une pression de 1 MPa. La température et les pressions d'éthylène et d'hydrogène ont été maintenues constantes pendant la durée de la polymérisation. Puis on y a introduit 66 mg du précurseur solide obtenu en A. Après 60 minutes, l'autoclave a été dégazé et refroidi. 197 g de polyéthylène ont été recueillis. Aucune trace de croûtage à l'intérieur du réacteur de polymérisation n'a été observée. Le système catalytique a présenté une activité α de 299.

**Revendications**

**1.** Précurseur solide d'un système catalytique pour la polymérisation d'oléfines, contenant au moins un agent ionisant, au moins un métallocène neutre halogéné de formule $(C_p)a(C_p')_bMX_xZ_z$, dans laquelle

- $C_p$ et $C_p$' désignent chacun un radical hydrocarboné insaturé coordiné à l'atome central M, les groupes $C_p$ et $C_p$' pouvant être liés par un pont covalent,

- M désigne le métal de transition, qui est choisi parmi les groupes IIIB, IVB, VB et VIB du tableau périodique,
- a, b, x et z désignent des nombres entiers tels que (a + b + x + z) = m, x > 0, z ≥ 0 et a et/ou b ≠ 0,
- m désigne la valence du métal de transition M
- X désigne un halogène, et
- Z désigne un radical hydrocarboné pouvant éventuellement comprendre de l'oxygène ou un radical silyl de formule (-$R_t$-Si-R'R"R"') où
- R désigne un groupe alkyle, alkényle, aryle, alkoxy ou cycloalkyle éventuellement substitué comprenant jusqu'à 20 atomes de carbone,
- R', R" et R"' sont identiques ou différents et désignent chacun un halogène ou un groupe alkyle, alkényle, aryle, alkoxy ou cycloalkyle éventuellement substitué comprenant jusqu'à 20 atomes de carbone,
- t désigne 0 ou 1,

caractérisé en ce que ledit précurseur comprend en outre au moins un composé catalytique en plus du métallocène neutre et de l'agent ionisant.

**2.** Précurseur solide comprenant au moins un métallocène neutre, un agent ionisant et un composé catalytique selon la revendication 1, caractérisé en ce que le composé catalytique comprend 10 à 30 % en poids d'un métal de transition choisi parmi les groupes IIIB, IVB, VB et VIB du tableau périodique, 20 à 50 % en poids d'un halogène, 0,5 à 20 % en poids de magnésium et 0,5 à 20 % en poids d'aluminium.

**3.** Précurseur solide selon la revendication 1 ou 2, caractérisé en ce que le métal de transition est le zirconium.

**4.** Précurseur solide selon l'une quelconque des revendications 1 à 3, caractérisé en ce que l'agent ionisant est choisi parmi le tétrakis(pentafluorophényl)borate de triphénylcarbénium et le tri(pentafluorophényl)bore.

**5.** Précurseur solide selon l'une quelconque des revendications 1 à 4, caractérisé en ce que l'agent ionisant comprend un cation de type carbénium.

**6.** Précurseur selon la revendication 5, caractérisé en ce que l'agent ionisant est le tétrakis(pentafluorophényl)borate de triphénylcarbénium.

**7.** Précurseur solide selon l'une quelconque des revendications 1 à 6, caractérisé en ce que le rapport molaire entre le métallocène neutre et l'agent ionisant est de 0,5 à 2.

**8.** Précurseur solide selon l'une quelconque des revendications 1 à 7, caractérisé en ce qu'il comprend en outre un support minéral ou polymérique.

**9.** Précurseur solide selon la revendication 8, caractérisé en ce que le support est sélectionné parmi la silice, l'alumine, le dichlorure de magnésium, le phosphate d'aluminium et leurs mélanges.

**10.** Précurseur solide selon la revendication 8 ou 9, caractérisé en ce que le rapport pondéral entre le support et le métallocène neutre est compris entre 0,1 et 1000.

**11.** Précurseur solide selon l'une quelconque des revendications 1 à 10, caractérisé en ce qu'il se présente sous forme d'une poudre de granulométrie définie par un diamètre moyen D de 1 à 500 μm et un écart type σ de 5 à 50 μm, et en ce qu'il comprend de 1 à 50 % en poids d'halogène et de 0,1 à 30 % en poids du métal de transition.

**12.** Précurseur solide selon l'une quelconque des revendications 1 à 11, caractérisé en ce qu'il présente une stabilité supérieure à 0,95, définie par le rapport entre, d'une part, le poids de polyéthylène obtenu en polymérisant, pendant une heure, de l'éthylène sous une pression partielle de 1 bar en présence d'un système catalytique incorporant, dans un rapport pondéral de 0,1 à 10, un composé organométallique et ledit précurseur ayant subi, après mélange du métallocène neutre halogéné et de l'agent ionisant, un stockage de 48 heures à température ambiante, en atmosphère d'azote et, d'autre part, le poids de polyéthylène obtenu en polymérisant, pendant une heure, de l'éthylène sous une pression partielle de 1 bar en présence du même système catalytique, dans lequel le précurseur n'a pas subi de stockage.

**13.** Procédé de préparation d'un précurseur solide conforme à l'une quelconque des revendications 1 à 12, selon lequel on mélange, dans un milieu hétérogène, au moins un composé à base d'un agent ionisant avec au moins

un composé catalytique et au moins un composé à base d'un métallocène neutre halogéné de formule $(C_p)_a(C_p')_bMX_xZ_z$, dans laquelle

- $C_p$ et $C_p$' désignent chacun un radical hydrocarboné insaturé coordiné à l'atome central M, les groupes $C_p$ et $C_p$' pouvant être liés par un pont covalent,
- M désigne le métal de transition, qui est choisi parmi les groupes IIIB, IVB, VB et VIB du tableau périodique,
- a, b, x et z désignent des nombres entiers tels que $(a + b + x + z) = m$, $x > 0$, $z \geq 0$ et a et/ou $b \neq 0$,
- m désigne la valence du métal de transition M
- X désigne un halogène, et
- Z désigne un radical hydrocarboné pouvant éventuellement comprendre de l'oxygène ou un radical silyl de formule ($-R_t$-Si-R'R"R"') où
- R désigne un groupe alkyle, alkényle, aryle, alkoxy ou cycloalkyle éventuellement substitué comprenant jusqu'à 20 atomes de carbone,
- R', R" et R"' sont identiques ou différents et désignent chacun un halogène ou un groupe alkyle, alkényle, aryle, alkoxy ou cycloalkyle éventuellement substitué comprenant jusqu'à 20 atomes de carbone,
- t désigne 0 ou 1.

**14.** Procédé selon la revendication 13, caractérisé en ce que le mélange est effectué à une température comprise entre 0 et 100 °C.

**15.** Procédé selon la revendications 13 ou 14, caractérisé en ce qu'on incorpore en outre un support dans le mélange.

**16.** Procédé selon la revendication 15, caractérisé en ce qu'on prépare d'abord un mélange du support et du composé à base d'un métallocène neutre, auquel on ajoute ensuite le composé à base d'un agent ionisant.

**17.** Procédé selon la revendication 16, caractérisé en ce que l'ajout du composé à base d'un agent ionisant est effectué par imprégnation du mélange, obtenu en l'absence d'un liquide, du support et du composé à base d'un métallocène neutre avec une solution du composé à base d'un agent ionisant, au moins 80 % du composé à base d'un métallocène neutre étant insoluble dans cette solution.

**18.** Procédé selon la revendication 16 ou 17, caractérisé en ce que le mélange du support et du composé à base d'un métallocène neutre est effectué à une température de 10 à 120 °C, et l'ajout du composé à base d'un agent ionisant est effectué à une température de 0 à 60 °C.

**19.** Procédé selon l'une quelconque des revendications 13 à 18, caractérisé en ce que, pour obtenir le composé à base d'un agent ionisant, on imprègne un support du précurseur et/ou un composé catalytique avec une solution de l'agent ionisant.

**20.** Procédé selon l'une quelconque des revendications 13 à 19, caractérisé en ce que, pour obtenir le composé à base d'un métallocène neutre, on imprègne un support et/ou un composé catalytique avec une solution du métallocène neutre.

**21.** Procédé selon l'une quelconque des revendications 13 à 20, caractérisé en ce que le composé catalytique comprend 10 à 30 % en poids d'un métal de transition choisi parmi les groupes IIIB, IVB, VB et VIB du tableau périodique, 20 à 50 % en poids d'un halogène, 0,5 à 20 % en poids de magnésium et 0,5 à 20 % en poids d'aluminium.

**22.** Système catalytique pour la polymérisation d'oléfines obtenu par mise en contact d'un précurseur solide conforme à l'une quelconque des revendications 1 à 12, et d'un composé organoamétallique dérivé d'un métal choisi parmi les groupes IA, IIA, IIB, IIIA et IVA du tableau périodique.

**23.** Système catalytique selon la revendication 22, caractérisé en ce que le composé organométallique est choisi parmi les composés organoaluminiques de formule AlTT'T" dans laquelle les groupes T, T' et T" désignent chacun un groupe alkyle, alkényle, aryle ou alkoxy, éventuellement substitué, contenant jusqu'à 20 atomes de carbone.

**24.** Système catalytique selon la revendication 22 ou 23, caractérisé en ce que le composé organométallique est choisi parmi le triéthylaluminium et le triisobutylaluminium.

**25.** Système catalytique selon la revendication 22 ou 23, caractérisé en ce que le composé organométallique est le

triméthylaluminium.

**26.** Procédé de polymérisation d'au moins une oléfine dans lequel on utilise un système catalytique conforme à l'une quelconque des revendications 22 à 25.

**27.** Procédé selon la revendication 26, caractérisé en ce qu'on mélange d'abord l'oléfine avec le composé organométallique et on y ajoute ensuite le précurseur solide.

**28.** Procédé selon la revendication 26 ou 27, caractérisé en ce que l'oléfine est de l'éthylène et/ou du propylène.

## Claims

**1.** Solid precursor of a catalytic system for the polymerization of olefins containing at least one ionizing agent and at least one neutral halogenated metallocene of formula $(C_p)_a(C_p')_bMX_xZ_z$, in which

- $C_p$ and $C_p'$ each denote an unsaturated hydrocarbon radical coordinated to the central atom M, it being possible for the $C_p$ and $C_p'$ groups to be bonded via a covalent bridge,
- M denotes the transition metal, which is chosen from groups IIIB, IVB, VB and VIB of the periodic table,
- a, b, x and z denote integers such that $(a + b + x + z) = m$, $x > 0$, $z \geq 0$ and a and/or $b \neq 0$,
- m denotes the valency of the transition metal M
- X denotes a halogen, and
- Z denotes a hydrocarbon radical which can optionally comprise oxygen or a silyl radical of formula $(-R_t\text{-Si-}R'R''R''')$ where
- R denotes an optionally substituted alkyl, alkenyl, aryl, alkoxy or cycloalkyl group comprising up to 20 carbon atoms,
- R', R'' and R''' are identical or different and each denote a halogen or an optionally substituted alkyl, alkenyl, aryl, alkoxy or cycloalkyl group comprising up to 20 carbon atoms,
- t denotes 0 or 1,

characterized in that the said precursor additionally comprises at least one catalytic compound in addition to the neutral metallocene and the ionizing agent.

**2.** Solid precursor comprising at least one neutral metallocene, one ionizing agent and one catalytic compound according to Claim 1, characterized in that the catalytic compound comprises 10 to 30% by weight of a transition metal chosen from groups IIIB, IVB, VB and VIB of the periodic table, 20 to 50% by weight of a halogen, 0.5 to 20% by weight of magnesium and 0.5 to 20% by weight of aluminium.

**3.** Solid precursor according to Claim 1 or 2, characterized in that the transition metal is zirconium.

**4.** Solid precursor according to any one of Claims 1 to 3, characterized in that the ionizing agent is chosen from triphenylcarbenium tetrakis (pentafluorophenyl) borate and tri(pentafluorophenyl)boron.

**5.** Solid precursor according to any one of Claims 1 to 4, characterized in that the ionizing agent comprises a cation of carbenium type.

**6.** Precursor according to Claim 5, characterized in that the ionizing agent is triphenylcarbenium tetrakis(pentafluorophenyl)borate.

**7.** Solid precursor according to any one of Claims 1 to 6, characterized in that the molar ratio of the neutral metallocene to the ionizing agent is from 0.5 to 2.

**8.** Solid precursor according to any one of Claims 1 to 7, characterized in that it additionally comprises an inorganic or polymer support.

**9.** Solid precursor according to Claim 8, characterized in that the support is selected from silica, alumina, magnesium dichloride, aluminium phosphate and their mixtures.

**10.** Solid precursor according to Claim 8 or 9, characterized in that the ratio by weight of the support to the neutral metallocene is between 0.1 and 1000.

**11.** Solid precursor according to any one of Claims 1 to 10, characterized in that it is provided in the form of a powder with a particle size defined by a mean diameter D of 1 to 500 µm and a standard deviation σ of 5 to 50 µm and in that it comprises from 1 to 50% by weight of halogen and from 0.1 to 30% by weight of the transition metal.

**12.** Solid precursor according to any one of Claims 1 to 11, characterized in that it exhibits a stability greater than 0.95, defined by the ratio of, on the one hand, the weight of polyethylene obtained by polymerizing, for one hour, ethylene under a partial pressure of 1 bar in the presence of a catalytic system incorporating, in a ratio by weight of 0.1 to 10, an organometallic compound and the said precursor which has been subjected, after mixing the neutral halogenated metallocene and the ionizing agent, to storage for 48 hours at ambient temperature, in a nitrogen atmosphere, to, on the other hand, the weight of polyethylene obtained by polymerizing, for one hour, ethylene under a partial pressure of 1 bar in the presence of the same catalytic system, in which the precursor has not been subjected to storage.

**13.** Process for the preparation of a solid precursor in accordance with any one of Claims 1 to 12, according to which at least one compound based on an ionizing agent is mixed, in a heterogeneous medium, with at least one catalytic compound and at least one compound based on a neutral halogenated metallocene of formula $(C_p)_a(C_p')_bMX_xZ_z$, in which

- $C_p$ and $C_p'$ each denote an unsaturated hydrocarbon radical coordinated to the central atom M, it being possible for the $C_p$ and $C_p'$ groups to be bonded via a covalent bridge,
- M denotes the transition metal, which is chosen from groups IIIB, IVB, VB and VIB of the periodic table,
- a, b, x and z denote integers such that $(a + b + x + z) = m$, $x > 0$, $z \geq 0$ and a and/or $b \neq 0$,
- m denotes the valency of the transition metal M
- X denotes a halogen, and
- Z denotes a hydrocarbon radical which can optionally comprise oxygen or a silyl radical of formula $(-R_t\text{-Si-}R'R''R''')$ where
- R denotes an optionally substituted alkyl, alkenyl, aryl, alkoxy or cycloalkyl group comprising up to 20 carbon atoms,
- R', R'' and R''' are identical or different and each denote a halogen or an optionally substituted alkyl, alkenyl, aryl, alkoxy or cycloalkyl group comprising up to 20 carbon atoms,
- t denotes 0 or 1.

**14.** Process according to Claim 13, characterized in that the mixing is carried out at a temperature of between 0 and 100°C.

**15.** Process according to Claim 13 or 14, characterized in that a support is additionally incorporated in the mixture.

**16.** Process according to Claim 15, characterized in that a mixture of the support and of the compound based on a neutral metallocene is first prepared, to which the compound based on an ionizing agent is subsequently added.

**17.** Process according to Claim 16, characterized in that the addition of the compound based on an ionizing agent is carried out by impregnating the mixture, obtained in the absence of a liquid, of the support and of the compound based on a neutral metallocene with a solution of the compound based on an ionizing agent, at least 80% of the compound based on a neutral metallocene being insoluble in this solution.

**18.** Process according to Claim 16 or 17, characterized in that the mixing of the support and of the compound based on a neutral metallocene is carried out at a temperature of 10 to 120°C and the addition of the compound based on an ionizing agent is carried out at a temperature of 0 to 60°C.

**19.** Process according to any one of Claims 13 to 18, characterized in that, in order to obtain the compound based on an ionizing agent, a support of the precursor and/or a catalytic compound is/are impregnated with a solution of the ionizing agent.

**20.** Process according to any one of Claims 13 to 19, characterized in that, in order to obtain the compound based on a neutral metallocene, a support and/or a catalytic compound is/are impregnated with a solution of the neutral

metallocene.

**21.** Process according to any one of Claims 13 to 20, characterized in that the catalytic compound comprises 10 to 30% by weight of a transition metal chosen from groups IIIB, IVB, VB and VIB of the periodic table, 20 to 50% by weight of a halogen, 0.5 to 20% by weight of magnesium and 0.5 to 20% by weight of aluminium.

**22.** Catalytic system for the polymerization of olefins obtained by bringing a solid precursor in accordance with any one of Claims 1 to 12 into contact with an organometallic compound derived from a metal chosen from groups IA, IIA, IIB, IIIA and IVA of the periodic table.

**23.** Catalytic system according to Claim 22, characterized in that the organometallic compound is chosen from organoaluminium compounds of formula AlTT'T" in which the T, T' and T" groups each denote an optionally substituted alkyl, alkenyl, aryl or alkoxy group containing up to 20 carbon atoms.

**24.** Catalytic system according to Claim 22 or 23, characterized in that the organometallic compound is chosen from triethylaluminium and triisobutylaluminium.

**25.** Catalytic system according to Claim 22 or 23, characterized in that the organometallic compound is trimethylaluminium.

**26.** Process for the polymerization of at least one olefin in which use is made of a catalytic system in accordance with any one of Claims 22 to 25.

**27.** Process according to Claim 26, characterized in that the olefin is first mixed with the organometallic compound and the solid precursor is subsequently added thereto.

**28.** Process according to Claim 26 or 27, characterized in that the olefin is ethylene and/or propylene.

## Patentansprüche

**1.** Feste Vorstufe eines katalytischen Systems für die Polymerisation von Olefinen, die wenigstens ein ionisierendes Mittel, wenigstens ein halogeniertes neutrales Metallocen der Formel $(C_p)_a(C_p')_bMX_xZ_z$, in der

- $C_p$ und $C_p'$ jedes einen ungesättigten Kohlenwasserstoffrest bezeichnen, der an das Zentralatom M koordiniert ist, wobei die Gruppen $C_p$ und $C_p'$ durch eine kovalente Brücke verbunden sein können,
- M das Übergangsmetall bezeichnet, das unter den Gruppen IIIB, IVB, VB und VIB des Periodensystems ausgewählt ist,
- a, b, x und z solche ganze Zahlen bezeichnen, daß $(a + b + x + z) = m$, $x > 0$, $z \geq 0$ und a und/oder $b \neq 0$.
- m die Wertigkeit des Übergangsmetalls M bezeichnet,
- X ein Halogen bezeichnet und
- Z einen Kohlenwasserstoffrest, der gegebenenfalls Sauerstoff umfassen kann, oder einen Silylrest der Formel $(-R_t\text{-}Si\text{-}R'R''R''')$ bezeichnet, worin
- R eine gegebenenfalls substituierte Alkyl-, Alkenyl-, Aryl-, Alkoxy- oder Cycloalkylgruppe, die bis zu 20 Kohlenstoffatome umfaßt, bezeichnet.
- R', R" und R"' gleich oder verschieden sind und jedes ein Halogen oder eine gegebenenfalls substituierte Alkyl-, Alkenyl-, Aryl-, Alkoxy- oder Cycloalkylgruppe, die bis zu 20 Kohlenstoffatome umfaßt, bezeichnen,
- t 0 oder 1 bezeichnet,

enthält, dadurch gekennzeichnet, daß besagte Vorstufe zusätzlich zu dem neutralen Metallocen und dem ionisierenden Mittel außerdem wenigstens eine katalytische Verbindung umfaßt.

**2.** Feste Vorstufe, die wenigstens ein neutrales Metallocen, ein ionisierendes Mittel und eine katalytische Verbindung umfaßt, gemäß Anspruch 1, dadurch gekennzeichnet, daß die katalytische Verbindung 10 bis 30 Gew.-% eines Übergangsmetalls, das unter den Gruppen IIIB, IVB, VB und VIB des Periodensystems ausgewählt ist, 20 bis 50 Gew.-% eines Halogens, 0,5 bis 20 Gew.-% Magnesium und 0,5 bis 20 Gew.-% Aluminium umfaßt.

**3.** Feste Vorstufe gemäß Anspruch 1 oder 2, dadurch gekennzeichnet, daß das Übergangsmetall Zirkonium ist.

4. Feste Vorstufe gemäß einem der Ansprüche 1 bis 3, dadurch gekennzeichnet, daß das ionisierende Mittel unter Triphenylcarbenium-tetrakis(pentafluorphenyl)borat und Tri(pentafluorphenyl)boran ausgewählt ist.

5. Feste Vorstufe gemäß einem der Ansprüche 1 bis 4, dadurch gekennzeichnet, daß das ionisierende Mittel ein Kation vom Carbenium-Typ umfaßt.

6. Vorstufe gemäß Anspruch 5, dadurch gekennzeichnet, daß das ionisierende Mittel Triphenylcarbenium-tetrakis (pentafluorphenyl)borat ist.

7. Feste Vorstufe gemäß einem der Ansprüche 1 bis 6, dadurch gekennzeichnet, daß das Molverhältnis zwischen dem neutralen Metallocen und dem ionisierenden Mittel 0,5 bis 2 beträgt.

8. Feste Vorstufe gemäß einem der Ansprüche 1 bis 7, dadurch gekennzeichnet, daß es außerdem einen mineralischen oder polymeren Träger umfaßt.

9. Feste Vorstufe gemäß Anspruch 8, dadurch gekennzeichnet, daß der Träger unter Siliciumdioxid, Aluminiumoxid, Magnesiumdichlorid, Aluminiumphosphat und ihren Gemischen ausgewählt ist.

10. Feste Vorstufe gemäß Anspruch 8 oder 9, dadurch gekennzeichnet, daß das Gewichtsverhältnis zwischen dem Träger und dem neutralen Metallocen zwischen 0,1 und 1000 liegt.

11. Feste Vorstufe gemäß einem der Ansprüche 1 bis 10, dadurch gekennzeichnet, daß sie in Form eines Pulvers mit einer Granulometrie, die durch einen mittleren Durchmesser D von 1 bis 500 µm und eine Standardabweichung σ von 5 bis 50 µm definiert ist, vorliegt und daß sie 1 bis 50 Gew.-% Halogen und 0,1 bis 30 Gew.-% des Übergangsmetalls umfaßt.

12. Feste Vorstufe gemäß einem der Ansprüche 1 bis 11, dadurch gekennzeichnet, daß sie eine Stabilität größer als 0,95 aufweist, die definiert ist durch das Verhältnis zwischen einerseits dem Gewicht an Polyethylen, das erhalten wird, indem Ethylen unter einem Partialdruck von 1 bar eine Stunde lang in Gegenwart eines katalytischen Systems, das in einem Gewichtsverhältnis von 0,1 bis 10 eine metallorganische Verbindung und besagte Vorstufe, die nach Mischen des halogenierten neutralen Metallocens und des ionisierenden Mittels bei Raumtemperatur unter Stickstoffatmosphäre 48 Stunden gelagert worden ist, vereinigt, polymerisiert wird, und andererseits dem Gewicht an Polyethylen, das erhalten wird, indem Ethylen unter einem Partialdruck von 1 bar eine Stunde lang in Gegenwart des gleichen katalytischen Systems, in dem die Vorstufe nicht gelagert wurde, polymerisiert wird.

13. Verfahren zur Herstellung einer festen Vorstufe gemäß einem der Ansprüche 1 bis 12, gemäß dem man in einem heterogenen Medium wenigstens eine Verbindung auf der Basis eines ionisierenden Mittels mischt mit wenigstens einer katalytischen Verbindung und wenigstens einer Verbindung auf der Basis eines halogenierten neutralen Metallocens der Formel $(C_p)_a(C_p')_bMX_xZ_z$, in der

- $C_p$ und $C_p'$ jedes einen ungesättigten Kohlenwasserstoffrest bezeichnen, der an das Zentralatom M koordiniert ist, wobei die Gruppen $C_p$ und $C_p'$ durch eine kovalente Brücke verbunden sein können,
- M das Übergangsmetall bezeichnet. das unter den Gruppen IIIB, IVB, VB und VIB des Periodensystems ausgewählt ist,
- a, b, x und z solche ganze Zahlen bezeichnen, daß $(a + b + x + z) = m$, $x > 0$, $z \geq 0$ und a und/oder $b \neq 0$,
- m die Wertigkeit des Übergangsmetalls M bezeichnet,
- X ein Halogen bezeichnet und
- Z einen Kohlenwasserstoffrest, der gegebenenfalls Sauerstoff umfassen kann, oder einen Silylrest der Formel $(-R_t\text{-Si-}R'R''R''')$ bezeichnet, worin
- R eine gegebenenfalls substituierte Alkyl-, Alkenyl-, Aryl-, Alkoxy- oder Cycloalkylgruppe, die bis zu 20 Kohlenstoffatome umfaßt, bezeichnet,
- R', R" und R"' gleich oder verschieden sind und jedes ein Halogen oder eine gegebenenfalls substituierte Alkyl-, Alkenyl-, Aryl-, Alkoxy- oder Cycloalkylgruppe, die bis zu 20 Kohlenstoffatome umfaßt, bezeichnen,
- t 0 oder 1 bezeichnet.

14. Verfahren gemäß Anspruch 13, dadurch gekennzeichnet, daß das Mischen bei einer Temperatur zwischen 0 und 100 °C ausgeführt wird.

**15.** Verfahren gemäß Anspruch 13 oder 14, dadurch gekennzeichnet, daß man dem Gemisch außerdem einen Träger zusetzt.

**16.** Verfahren gemäß Anspruch 15, dadurch gekennzeichnet, daß man zuerst ein Gemisch des Trägers und der Verbindung auf der Basis eines neutralen Metallocens herstellt, dem man dann die Verbindung auf der Basis eines ionisierenden Mittels hinzufügt.

**17.** Verfahren gemäß Anspruch 16, dadurch gekennzeichnet, daß die Zugabe der Verbindung auf der Basis eines ionisierenden Mittels durch Tränken des in Abwesenheit einer Flüssigkeit erhaltenen Gemischs des Trägers und der Verbindung auf der Basis eines neutralen Metallocens mit einer Lösung der Verbindung auf der Basis eines ionisierenden Mittels ausgeführt wird, wobei wenigstens 80% der Verbindung auf der Basis eines neutralen Metallocens in dieser Lösung unlöslich sind.

**18.** Verfahren gemäß Anspruch 16 oder 17, dadurch gekennzeichnet, daß das Mischen des Trägers und der Verbindung auf der Basis eines neutralen Metallocens bei einer Temperatur von 10 bis 120 °C ausgeführt wird und die Zugabe der Verbindung auf der Basis eines ionisierenden Mittels bei einer Temperatur von 0 bis 60 °C ausgeführt wird.

**19.** Verfahren gemäß einem der Ansprüche 13 bis 18, dadurch gekennzeichnet, daß man, um die Verbindung auf der Basis eines ionisierenden Mittels zu erhalten, einen Träger der Vorstufe und/oder eine katalytische Verbindung mit einer Lösung des ionisierenden Mittels tränkt.

**20.** Verfahren gemäß einem der Ansprüche 13 bis 19, dadurch gekennzeichnet, daß man, um die Verbindung auf der Basis eines neutralen Metallocens zu erhalten, einen Träger und/oder eine katalytische Verbindung mit einer Lösung des neutralen Metallocens tränkt.

**21.** Verfahren gemäß einem der Ansprüche 13 bis 20, dadurch gekennzeichnet, daß die katalytische Verbindung 10 bis 30 Gew.-% eines Übergangsmetalls, das unter den Gruppen IIIB, IVB, VB und VIB des Periodensystems ausgewählt ist, 20 bis 50 Gew.-% eines Halogens, 0,5 bis 20 Gew.-% Magnesium und 0,5 bis 20 Gew.-% Aluminium umfaßt.

**22.** Katalytisches System zur Olefinpolymerisation, das durch Inkontaktbringen einer festen Vorstufe gemäß einem der Ansprüche 1 bis 12 und einer metallorganischen Verbindung, die von einem unter den Gruppen IA, IIA, IIB, IIIA und IVA des Periodensystems ausgewählten Metall abgeleitet ist, erhalten wird.

**23.** Katalytisches System gemäß Anspruch 22, dadurch gekennzeichnet, daß die metallorganische Verbindung unter den aluminiumorganischen Verbindungen der Formel AlTT'T'', in der die Gruppen T, T' und T'' jede eine gegebenenfalls substituierte Alkyl-, Alkenyl-, Aryl- oder Alkoxygruppe, die bis zu 20 Kohlenstoffatome enthält, bezeichnen.

**24.** Katalytisches System gemäß Anspruch 22 oder 23, dadurch gekennzeichnet, daß die metallorganische Verbindung unter Triethylaluminium und Triisobutylaluminium ausgewählt ist.

**25.** Katalytisches System gemäß Anspruch 22 oder 23, dadurch gekennzeichnet, daß die metallorganische Verbindung Trimethylaluminium ist.

**26.** Verfahren zur Polymerisation wenigstens eines Olefins, bei dem man ein katalytisches System gemäß einem der Ansprüche 22 bis 25 verwendet.

**27.** Verfahren gemäß Anspruch 26, dadurch gekennzeichnet, daß man zuerst das Olefin mit der metallorganischen Verbindung mischt und man dann die feste Vorstufe dazu hinzufügt.

**28.** Verfahren gemäß Anspruch 26 oder 27, dadurch gekennzeichnet, daß das Olefin Ethylen und/oder Propylen ist.